# EUROPEAN PATENT SPECIFICATION

(11) **EP 4 528 484 B1**
(45) Date of publication and mention of the grant of the patent: **04.11.2026**
(21) Application number: 23905328.3
(22) Date of filing: 08.09.2023
(51) Int. Cl.: G06F 8/65, G06F 8/61, G06F 8/71

(54) **METHOD FOR UPGRADING OPERATING SYSTEM, AND ELECTRONIC DEVICE**
VERFAHREN ZUR AKTUALISIERUNG EINES BETRIEBSSYSTEMS UND ELEKTRONISCHE VORRICHTUNG
PROCÉDÉ DE MISE À NIVEAU D'UN SYSTÈME D'EXPLOITATION ET DISPOSITIF ÉLECTRONIQUE

(30) Priority: 22.12.2022 CN 202211658830
(43) Date of publication of application: 26.03.2025
(73) Proprietor: Honor Device Co., Ltd., Shenzhen, Guangdong 518040 (CN)
(72) Inventor: LI, Yaru, Shenzhen, Guangdong 518040 (CN)
(74) Representative: Isarpatent
(86) International application number: PCT/CN2023/117785
(87) International publication number: WO 2024/131151

(56) References cited:
- CN-A- 109 753 299
- CN-A- 112 416 406
- CN-A- 113 805 914
- CN-A- 115 357 295
- US-A1- 2008 307 215
- US-A1- 2012 079 474

## Description

### TECHNICAL FIELD

This application relates to the field of computer technologies, and in particular, to an operating system upgrade method, an electronic device, and a computer-readable storage medium.

### BACKGROUND

Before an electronic device is delivered from a factory, an operating system may be burned into the electronic device, so that the operating system is installed before the electronic device is delivered from the factory. Subsequently, to improve user experience, the operating system in the electronic device may need to be upgraded. In this case, an over-the-air technology (Over-the-Air Technology, OTA) may be used to upgrade the operating system from an operating system of a lower version (for example, V1.0) to an operating system of a higher version (for example, V2.0). The OTA is a technology for remotely upgrading a version of the operating system by using a wireless network interface of the electronic device.

However, in practice, a user may have poor experience of using an upgraded operating system of a higher version. For example, the user is accustomed to using an operating system of a lower version, and finds it inconvenient to use the upgraded operating system of the higher version. In this case, the user may expect a rollback from the operating system of the higher version to the operating system of the lower version.

However, in a process of implementing the embodiments of this application, the inventor finds that in the conventional technology, when facing a requirement of rolling back from the operating system of the higher version to the operating system of the lower version, the user can only take the electronic device to a fixed outlet. Then, a staff member at the outlet performs a rollback operation to roll back the operating system to the lower version.

CN 115 357 295 A discloses a system rollback method, an apparatus, and a storage medium, pertaining to the field of terminal technology.

### SUMMARY

In view of this, this application provides an operating system upgrade method, an electronic device, and a computer-readable storage medium, as defined in the appended set of claims. The electronic device may obtain a rollback package for rolling back from a higher version to a lower version, and automatically complete processing of rolling back to an operating system of a lower version, and does not need to be taken to an outlet for a rollback at the outlet.

According to a first aspect, this application provides an operating system upgrade method, applied to an electronic device. The electronic device includes a memory, and the memory includes a basic partition, a first static partition, a second static partition, a dynamic partition, and a user data partition. The method includes: loading the basic partition, the first static partition, and the dynamic partition to run an operating system of a first version; obtaining a first installation package, where the first installation package is an installation package of an operating system of a second version, the second version is lower than the first version, and the first installation package includes first system data and second system data of the operating system of the second version; writing the first system data into the second static partition, and writing the first system data into the user data partition; rebooting and entering a repair mode; writing the second system data in the user data partition into the dynamic partition in the repair mode, and formatting the user data partition; and rebooting and loading the basic partition, the second static partition, and the dynamic partition to run the operating system of the second version.

In conclusion, in this application, during a rollback from an operating system of a higher version to an operating system of a lower version, the electronic device writes system data of the lower version into the static partition and the user data partition in a standby state, and then enters the repair mode, and writes system data in the user data partition into the dynamic partition, so that the system data that is in the user data partition and that supports running of the operating system of the lower version is read. Then, the user data partition is formatted in the repair mode, to clear data in the user data partition. Finally, when the electronic device reboots, the static partition and the dynamic partition that store the system data of the lower version can be successfully loaded, and the user data partition that does not need to be decrypted can be successfully loaded, so that the electronic device can successfully run in the operating system of the lower version.

In a possible design manner of the first aspect, before the rebooting and entering a repair mode, the method further includes: determining that the first installation package is used to install an operating system of a version lower than the first version.

That is, only when it is determined that a rollback is required, the electronic device reboots and enters the repair mode, to avoid a case in which when no rollback is required, the repair mode is incorrectly entered.

In a possible design manner of the first aspect, the first installation package includes a first version number, the first version number is a version number of the second version, and the determining that the first installation package is used to install an installation package of an operating system of a version lower than the first version includes: determining that the first version number is lower than a second version number, where the second version number is a version number of the first version.

If the first version number is lower than the second version number, it indicates that the version number carried in the installation package is lower than the version number of the operating system currently running in the electronic device, and this is a scenario of rolling back to a lower version.

In a possible design manner of the first aspect, after the determining that the first installation package is used to install an operating system of a version lower than the first version, the method further includes: recording a preset identifier in a preset sub-partition, where the preset sub-partition is a sub-partition accessible in the repair mode; and the writing the second system data in the user data partition into the dynamic partition in the repair mode, and formatting the user data partition includes: if the preset identifier is read from the preset sub-partition in the repair mode, writing the second system data in the user data partition into the dynamic partition, and formatting the user data partition.

That is, only when a rollback to a lower version is performed, merging (merge) and subsequent processing are performed, to avoid a case in which in a scenario in which no rollback is required, processing such as merging is incorrectly performed in the repair mode, and finally system running is affected.

In a possible design manner of the first aspect, before the obtaining a first installation package, the method further includes: displaying a first interface, where the first interface includes a first control; sending a package search request to a server in response to a first operation performed by a user on the first control; and receiving a download address fed back by the server based on the package search request. Correspondingly, the obtaining a first installation package includes: downloading the first installation package based on the download address.

That is, the user may actively trigger obtaining of the first installation package on the electronic device. In this way, when the user requires a rollback to a lower version, the first installation package can be obtained and a rollback can be implemented, to accurately meet the requirement of the user.

In a possible design manner of the first aspect, after the obtaining a first installation package, the method further includes: displaying a second interface, where the second interface includes version information of the operating system of the second version and a second control, and the second control is used to trigger installation of the operating system of the second version; and the writing the first system data into the second static partition, and writing the first system data into the user data partition includes: in response to a second operation performed by the user on the second control, writing the first system data into the second static partition, and writing the first system data into the user data partition.

That is, after obtaining the first installation package, the electronic device may perform a rollback operation only when the user confirms the rollback to the operating system of the lower version. In this way, the requirement of the user can be accurately met.

In a possible design manner of the first aspect, after the writing the second system data in the user data partition into the dynamic partition, the method further includes: synchronizing the first system data in the second static partition to the first static partition. In this way, the first static partition can also store the system data of the lower version. In this case, when subsequently booting from the first static partition, the electronic device can run the operating system of the lower version.

In a possible design manner of the first aspect, in a process of writing the first system data into the second static partition, and writing the first system data into the user data partition, the method further includes: displaying a third interface, where the third interface is an interface in the standby state of the electronic device.

That is, the system data of the lower version is written in the standby state, and therefore in a process of writing the system data, the user can normally use the electronic device.

In a possible design manner of the first aspect, in a process of writing the second system data in the user data partition into the dynamic partition in the repair mode, and formatting the user data partition, the method further includes: displaying a fourth interface, where the fourth interface includes progress prompt information, and the progress prompt information is used to notify merging and formatting progress; and the electronic device does not respond to an operation performed by the user on the fourth interface.

That is, in the repair mode, the user cannot normally operate the electronic device.

In a possible design manner of the first aspect, the rebooting and entering a repair mode includes: rebooting and starting a repair process; and the merging the second system data in the user data partition into the dynamic partition in the repair mode includes: triggering, by the repair process, start of a merge service, and merging and writing, by the merge service, the second system data in the user data partition into the dynamic partition; and
formatting, by the repair process, the user data partition.

That is, the merge service may be launched in the repair mode, to write the second system data in the user data partition into the dynamic partition.

In a possible design manner of the first aspect, the second version meets at least one of the following conditions:

The second version is a preset version. In this way, it can be ensured that a rollback to a version that is not excessively old or that does not have a large vulnerability is implemented. The second version is higher than a version of an operating system installed when the electronic device is delivered from a factory. In this way, it can be ensured that no rollback to a version that was not installed once in the electronic device, that is, a version that was not used once by the user, is implemented.

The second version is a version that is allowed to be installed in an area in which the electronic device is used. In this way, it can be ensured that a rollback to a version that is allowed to be installed in the electronic device is implemented.

In a possible design manner of the first aspect, before the loading the basic partition, the first static partition, and the dynamic partition to run an operating system of a first version, the method further includes: loading the basic partition, the second static partition, and the dynamic partition to run an operating system of a third version, where the third version is lower than the first version; obtaining a second installation package, where the second installation package is used for an upgrade to the operating system of the first version, and the second installation package includes third system data and fourth system data of the operating system of the first version; writing the third system data into the first static partition, and writing the fourth system data into the user data partition; and rebooting; and the loading the basic partition, the first static partition, and the dynamic partition to run an operating system of a first version includes: loading the basic partition, the first static partition, the dynamic partition, and the fourth system data in the user data partition to run the operating system of the first version.

That is, the operating system of the first version in the electronic device is obtained by upgrading the operating system of the third version. In addition, during an upgrade from the operating system of the lower version to the operating system of the higher version, after the system data is written, the electronic device normally reboots to run in the operating system of the higher version.

In a possible design manner of the first aspect, after the loading the basic partition, the first static partition, the dynamic partition, and the user data partition to run the operating system of the first version, the method further includes: writing the fourth system data in the user data partition into the dynamic partition.

In a possible design manner of the first aspect, before the rebooting, and loading the basic partition, the first static partition, the dynamic partition, and the user data partition, the method further includes: determining that the second installation package is not used to install an operating system of a version lower than the third version.

In a possible design manner of the first aspect, the second installation package includes the second version number, the second version number is the version number of the first version, and the determining that the second installation package is not used to install an operating system of a version lower than the third version includes: determining that a third version number is lower than the second version number, where the third version number is a version number of the third version.

In a possible design manner of the first aspect, after the loading the basic partition, the second static partition, and the dynamic partition to run the operating system of the second version, the method further includes: in response to a preset event, rebooting and entering the repair mode again, where if it is determined that entering the repair mode again is not to install an operating system of a version lower than the first version, processing of writing data in the user data partition into the dynamic partition is not performed. In this way, corresponding processing can be accurately performed based on an objective of entering the repair mode.

According to a second aspect, this application further provides an electronic device. The electronic device includes a processor and a memory. The memory includes a basic partition, a first static partition, a second static partition, a dynamic partition, and a user data partition. The processor is configured to execute software code stored in the memory, to enable the electronic device to perform the method according to the first aspect and any possible design manner of the first aspect.

According to a third aspect, an embodiment of this application provides a chip system. The chip system is applied to an electronic device including a display and a memory. The chip system includes one or more interface circuits and one or more processors. The interface circuit and the processor are connected to each other through a line. The interface circuit is configured to receive a signal from the memory of the electronic device and send the signal to the processor. The signal includes computer instructions stored in the memory. When the processor executes the computer instructions, the electronic device performs the method according to the first aspect and any possible design manner of the first aspect.

According to a fourth aspect, an embodiment of this application further provides a computer storage medium. The computer storage medium includes computer instructions, and when the computer instructions are run on an electronic device, the electronic device is enabled to perform the method according to the first aspect and any possible design manner of the first aspect.

According to a fifth aspect, this application provides a computer program product. When the computer program product is run on a computer, the computer is enabled to perform the method according to the first aspect and any possible design manner of the first aspect.

It can be understood that for beneficial effects that can be achieved by the electronic device according to the second aspect, the chip system according to the third aspect, the computer storage medium according to the fourth aspect, and the computer program product according to the fifth aspect, refer to the beneficial effects in the first aspect and any possible design manner of the first aspect. Details are not described herein again.

### BRIEF DESCRIPTION OF DRAWINGS

FIG. 1 is a schematic diagram of a rollback scenario to which an embodiment of this application is applicable;
FIG. 2 is a schematic diagram of a data storage structure according to an embodiment of this application;
FIG. 3 is a diagram of an operating system upgrade procedure;
FIG. 4 is a diagram of another operating system upgrade procedure;
FIG. 5 is a schematic diagram of an operating system upgrade process;
FIG. 6 is a first schematic diagram of an operating system upgrade procedure according to an embodiment of this application;
FIG. 7 is a second schematic diagram of an operating system upgrade procedure according to an embodiment of this application;
FIG. 8 is a diagram of a hardware structure of an electronic device according to an embodiment of this application;
FIG. 9 is a diagram of a software structure of an electronic device according to an embodiment of this application;
FIG. 10 is a first diagram of an operating system upgrade procedure according to an embodiment of this application;
FIG. 11A and FIG. 11B are a first schematic diagram of a mobile phone interface according to an embodiment of this application;
FIG. 12A, FIG. 12B, and FIG. 12C are a second schematic diagram of a mobile phone interface according to an embodiment of this application;
FIG. 13 is a second diagram of an operating system upgrade procedure according to an embodiment of this application;
FIG. 14 is a third schematic diagram of an operating system upgrade procedure according to an embodiment of this application;
FIG. 15A, FIG. 15B, and FIG. 15C are a third schematic diagram of a mobile phone interface according to an embodiment of this application;
FIG. 16A and FIG. 16B are an interaction diagram of an operating system upgrade procedure according to an embodiment of this application;
FIG. 17 is a third diagram of an operating system upgrade procedure according to an embodiment of this application; and
FIG. 18 is a diagram of a structure of a chip system according to an embodiment of this application.

### DESCRIPTION OF EMBODIMENTS

It should be noted that embodiments described in this specification are merely some embodiments rather than all embodiments of this application. All other embodiments obtained by a person of ordinary skill in the art based on the embodiments of this application without creative efforts shall fall within the protection scope of this application.

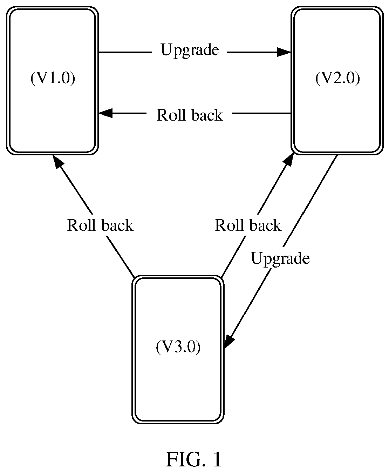

An embodiment of this application provides an operating system upgrade method that may be applied to a scenario in which an operating system in an electronic device needs to be rolled back from a higher version to a lower version. Referring to FIG. 1, an example in which the electronic device is a mobile phone is used, and an operating system in the mobile phone may be upgraded from a version V1.0 to a version V2.0. In this embodiment of this application, the operating system may be rolled back from the version V2.0 to the version V1.0. Still referring to FIG. 1, the operating system in the mobile phone may continue to be upgraded from the version V2.0 to a version V3.0. In this embodiment of this application, the operating system may be rolled back from the version V3.0 to the version V2.0, or may be rolled back from the version V3.0 to the version V1.0.

In the electronic device, system data of the operating system is stored in a memory of the electronic device. The memory usually includes a read-only memory (Read-Only Memory, ROM) and a random access memory (Random Access Memory, RAM). In actual applications, the RAM may also be referred to as a "main memory". Reading/Writing can be performed on the RAM at a very high speed at any time, and the RAM is usually used as a temporary data storage medium of the operating system or another running program. When the electronic device is powered off, the RAM cannot retain data. That is, the RAM usually stores temporary data in runtime of the electronic device. The ROM may also be referred to as a "nonvolatile memory". Data stored in the ROM is usually written in advance before the ROM is loaded into the entire electronic device, and is user data generated when a user uses the electronic device. In a working process of the entire electronic device, only reading can be performed, and unlike the RAM, overwriting cannot be quickly and conveniently performed on the ROM. Therefore, the data stored in the ROM is stable, and the stored data does not change after power-off. Based on the foregoing features, the system data of the operating system is usually stored in the ROM, to ensure stability of the system data.

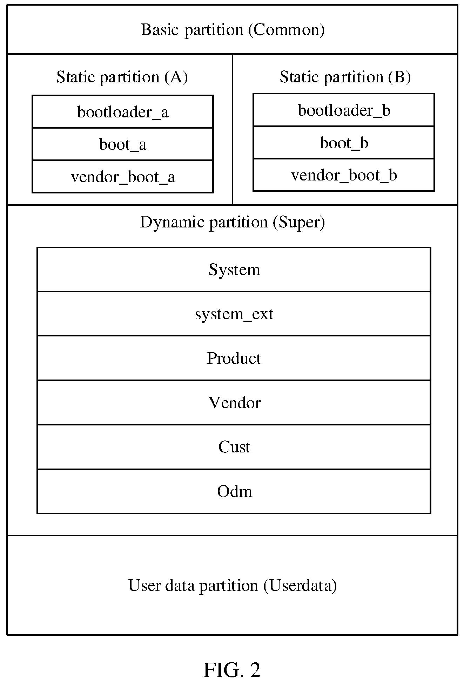

In addition, the ROM may store the system data by using a virtual A/B (also referred to as Virtual A/B) data storage structure. FIG. 2 is a schematic diagram of a virtual A/B data storage structure. As shown in FIG. 2, an Android (Android) operating system is used as an example. The virtual A/B data storage structure includes a basic partition (Common), a static partition (A), a static partition (B), a dynamic partition (Super), and a user data partition (Userdata).

The user data partition (Userdata) is used to store personal data of a user, for example, an application (application, APP) personally installed by the user, and a picture, a document, and a video personally stored by the user, and other personal data. Data stored in the basic partition (Common) is system data that does not participate in upgrading the operating system. A structure of the static partition (A) and a structure of the static partition (B) correspond to each other, and sub-partition names are distinguished from each other by using suffixes _a and _b. For example, the static partition (A) includes sub-partitions bootloader_a, boot_a, and vendor_boot_a; and the static partition (B) includes sub-partitions bootloader_b, boot_b, and vendor_boot_b. The dynamic partition (Super) includes a plurality of sub-partitions, for example, System, system_ext, vendor, product, Cust, and Odm.

It should be noted that the data storage structure shown in FIG. 2 is merely an example. In practice, the basic partition (Common) in the data storage structure may further include a plurality of sub-partitions, for example, a cache sub-partition and a Misc sub-partition. In addition, the static partition (A), the static partition (B), and the dynamic partition (Super) in the data storage structure may include more or fewer sub-partitions than those shown in FIG. 2. For example, the static partition (A) may further include sub-partitions such as Patch_a, dtbo_a, and vbmeta_a. Correspondingly, the static partition (B) may further include sub-partitions such as Patch_b, dtbo_b, and vbmeta_b. For another example, the dynamic partition (Super) may further include sub-partitions such as version and preload.

When the electronic device boots, the electronic device needs to boot from a static partition. For example, if the electronic device boots from the static partition (A), the basic partition (Common), the static partition (A), and the dynamic partition (Super) are sequentially loaded. For another example, if the electronic device boots from the static partition (B), the basic partition (Common), the static partition (B), and the dynamic partition (Super) are sequentially loaded.

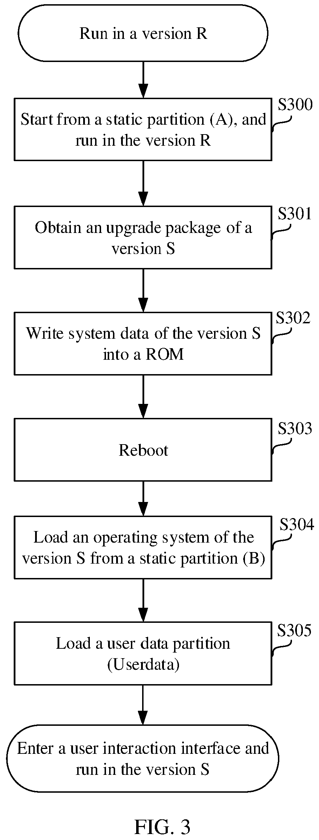

For the data storage structure shown in FIG. 2, when an upgrade from an operating system of a lower version to an operating system of a higher version is required, the electronic device may implement the upgrade by using a virtual A/B upgrade solution. Referring to FIG. 3, upgrading the operating system in the electronic device from a currently running lower version (for example, a version R) to a higher version (for example, a version S) by using the virtual A/B upgrade solution includes the following steps.

S300: Start from the static partition (A), and run in the version R.

That is, the electronic device sequentially loads the basic partition (Common), the static partition (A), and the dynamic partition (Super), to run in an operating system of the version R.

S301: Obtain an upgrade package of the version S.

The upgrade package includes system data for an upgrade to the version S.

S302: Write the coefficient data of the version S into the ROM.

The electronic device may write the system data of the version S in the upgrade package into the static partition (B) and the user data partition (Userdata), to avoid affecting running of the current version R.

S303: Reboot.

That is, the current operating system of the version S is exited, the electronic device is powered off, and the electronic device is powered on again.

S304: Load an operating system of the version S from the static partition (B).

The electronic device may load the static partition (B), to obtain, through loading, some system data required for the version S. In addition, the electronic device may load the system data in the dynamic partition (Super) and the system data in the user data partition (Userdata) through combination based on a snapshot technology (snapshot), to obtain, through loading, the other system data required for the version S.

S305: Load the user data partition (Userdata).

By loading the user data partition (Userdata), personal data, for example, an application, a picture, a video, and other data, of the user can be obtained. Only after the user data partition (Userdata) is successfully loaded, the electronic device can successfully run.

It should be noted herein that the system data of the version S written into the user data partition (Userdata) in S302 is plaintext data. Therefore, in S304, the electronic device can successfully load the system data in the user data partition (Userdata) without decryption. However, in the user data partition (Userdata), data other than the system data of the version S written in S302 is personal data, for example, a picture or a document, generated in a running process of the operating system of the version R, and needs to be decrypted for access. Therefore, a matching key is required to decrypt the encrypted data in the user data partition (Userdata), so as to successfully mount the user data partition (Userdata).

In addition, a key of the operating system of the higher version usually can decrypt encrypted data in a user data partition (Userdata) in the operating system of the lower version. However, a key of the operating system of the lower version cannot decrypt encrypted data in a user data partition (Userdata) in the operating system of the higher version.

That is, in a process of an upgrade from the lower version to the higher version, the key of the operating system of the higher version may be used to successfully decrypt the encrypted data in the user data partition (Userdata). In this case, in S305, a key of the operating system of the version S may be used to successfully decrypt the encrypted data in the user data partition (Userdata), so as to successfully mount the user data partition (Userdata).

After the reboot and the foregoing steps S304 and S305, the electronic device can enter a user interaction interface and run in the version S. In this way, the upgrade from the lower version to the higher version is implemented.

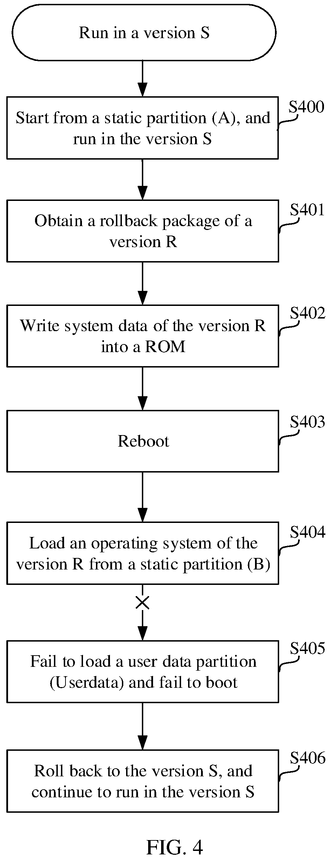

However, if the virtual A/B upgrade solution (which may be referred to as a conventional upgrade solution) shown in FIG. 3 is applied to a scenario of rolling back from an operating system of a higher version (for example, the version S) to an operating system of a lower version (for example, the version R), a rollback failure may occur. Specifically, referring to FIG. 4, rolling back the operating system in the electronic device from a currently running higher version (for example, the version R) to a lower version (for example, the version R) by using the conventional upgrade solution includes the following steps.

S400: Start from the static partition (A), and run in the version S.

That is, the electronic device sequentially loads the basic partition (Common), the static partition (A), and the dynamic partition (Super), to run in an operating system of the version S.

S401: Obtain a rollback package of the version R.

The rollback package is an installation package of an operating system of the version R, and includes full system data of the operating system of the version R.

S402: Write the coefficient data of the version R into the ROM.

The electronic device may write the system data of the version R in the rollback package into the static partition (B) and the user data partition (Userdata), to avoid affecting running of the current version S.

S403: Reboot.

That is, the current operating system of the version R is exited, the electronic device is powered off, and the electronic device is powered on again.

S404: Load the operating system of the version R from the static partition (B).

The electronic device may load the static partition (B), to obtain, through loading, some system data required for the version R. In addition, the electronic device may load the system data in the dynamic partition (Super) and the system data in the user data partition (Userdata) through combination based on a snapshot technology (snapshot), to obtain, through loading, the other system data required for the version R.

S405: Fail to load the user data partition (Userdata) and fail to boot.

There is a rollback from the higher version to the lower version, and a key of the operating system of the lower version cannot decrypt encrypted data in a user data partition (Userdata) in the operating system of the higher version. In this case, encrypted data in the user data partition (Userdata) cannot be successfully decrypted by using a key of the operating system of the version R, and consequently the user data partition (Userdata) cannot be successfully mounted. Therefore, the boot fails.

In addition, after the boot fails, the electronic device is triggered to roll back the operating system, that is, to perform the following step S406.

S406: Roll back to the version S, and continue to run in the version S.

The electronic device may load the basic partition (Common), the static partition (A), and the dynamic partition (Super) again, to continue to run in the operating system of the version S.

That is, in the scenario of rolling back from an operating system of a higher version to an operating system of a lower version, if the conventional upgrade solution is used, a rollback may be triggered because the user data partition (Userdata) fails to be mounted after reboot, and consequently the electronic device continues to run in the operating system of the higher version, and cannot successfully roll back to the operating system of the lower version.

Therefore, in the conventional technology, when the user requires a rollback from an operating system of a higher version to an operating system of a lower version, the user can only take the mobile phone to an outlet. Then, a staff member at the outlet performs a rollback operation to roll back the operating system.

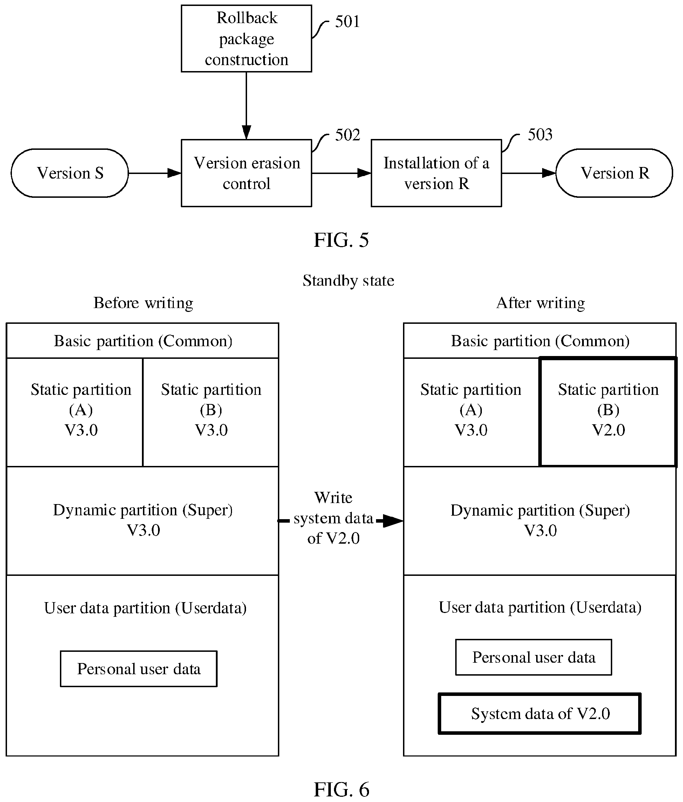

Specifically, referring to FIG. 5, an operating system vendor may construct a rollback package, and the constructed rollback package may be stored in a secure digital memory card (Secure Digital Memory Card, SD) (for example, a rollback package construction process shown in 501 in FIG. 5). The rollback package may be created by using a continuous integration (continuous integratuin, CI) system. Then, the staff member at the outlet may erase the operating system of the version S from the electronic device (for example, a version erasion control process shown in 502 in FIG. 5). Finally, the staff member at the outlet may install the operating system of the version R in the electronic device by using the SD card that includes the rollback package of the version R (for example, an installation process of the version R shown in 503 in FIG. 5). Therefore, the operating system in the electronic device is updated from the version S to the version R.

That is, in the conventional technology, the rollback from the operating system of the version S to the operating system of the version R cannot be implemented by using the conventional upgrade solution, the electronic device can be taken only to the outlet, and the staff member at the outlet installs the operating system of the version R through flashing, to roll back the operating system.

Based on the foregoing problem, an embodiment of this application provides an operating system upgrade method that may be applied to an electronic device that requires a rollback from an operating system of a version S (which may also be referred to as a first version) to an operating system of a version R (which may also be referred to as a second version). Before the embodiments of this application are described, a repair mode that needs to be used in this application is first described herein. The repair mode is a mode in which data or an operating system inside an electronic device may be modified. In the repair mode, the electronic device may back up or upgrade the operating system, or may restore factory settings. For example, the repair mode may be a recovery (recovery) mode in an Android system. For another example, the repair mode may be a preinstallation environment (Preinstallation Environment, PE) or a disk operating system (Disk Operating System, DOS) in a Windows system. The recovery mode in the Android system is mainly used as an example below for description.

The following describes the solutions of this application:

When a rollback from an operating system of a version S to an operating system of a version R is required, an electronic device may download a rollback package (which may also be referred to as a first installation package) of the operating system of the version R. In a standby state, the electronic device writes system data of the version R in the rollback package into a static partition and a user data partition (Userdata) in a ROM.

For example, the electronic device currently boots from a static partition (A), the version S is V3.0, and the version R is V2.0. Referring to FIG. 6, in the standby state, system data of V2.0 is written, the static partition (A), a static partition (B), and the user data partition (Userdata) store system data of V3.0, and the user data partition stores personal user data (as shown in "before writing" in FIG. 6). The electronic device currently boots from the static partition (A), that is, runs in an operating system of V3.0 including a basic partition (Common), the static partition (A), and a dynamic partition (Super). In this case, the electronic device may write system data that is of V2.0 and that needs to be stored in the static partition into the static partition (B), so that the static partition (B) can store some system data of V2.0 (as shown in the static partition (B) after writing in FIG. 6); and write system data that is of V2.0 and that needs to be stored in the dynamic partition into the user data partition (Userdata), so that the user data partition (Userdata) can store the other system data of V2.0 (as shown in the user data partition (Userdata) after writing in FIG. 6). In this way, data in the static partition (A) and data in the dynamic partition (Super) are not changed, and therefore running of the current operating system of the version V3.0 is not affected.

After the system data is written, the electronic device may reboot and enter a recovery mode. In the recovery mode, the electronic device writes the system data in the user data partition (Userdata) into the dynamic partition (Super). A process of writing the system data in the user data partition (Userdata) into the dynamic partition (Super) may also be referred to as a merging process. In this way, the dynamic partition (Super) can store the system data of the version R, so that the system data of the version R can be subsequently obtained by loading the dynamic partition (Super).

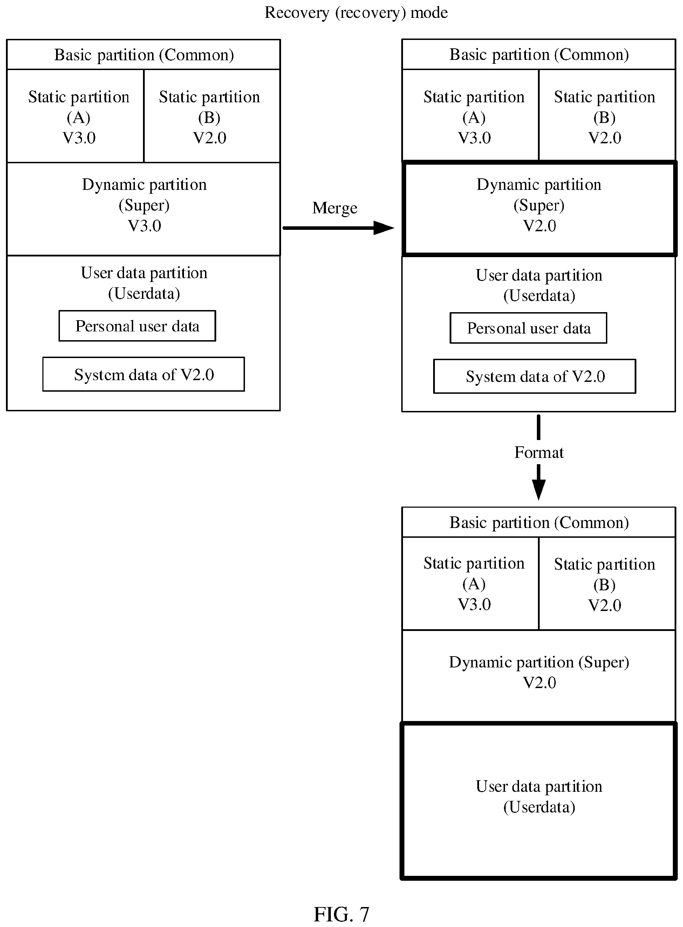

For example, after the some system data of V2.0 is written into the static partition (B) and the other system data of V2.0 is written into the user data partition (Userdata), referring to FIG. 7, in the recovery mode, the electronic device may first merge "the system data of V2.0" in the user data partition (Userdata) into the dynamic partition (Super), so that the dynamic partition (Super) stores the system data of V2.0.

In addition, after completing merging, the electronic device formats the user data partition (Userdata). In this way, the user data partition (Userdata) can no longer store data that needs to be decrypted for access.

Still referring to FIG. 7, in the recovery mode, after completing merging, the electronic device formats the user data partition (Userdata), to clear data, including the system data of V2.0 and the personal user data, in the user data partition.

Finally, when the electronic device reboots, the static partition and the dynamic partition (Super) that store the system data of the version R can be successfully loaded, and the user data partition (Userdata) that does not need to be decrypted can be successfully loaded, so that the electronic device can successfully run in the operating system of the version R. Still referring to FIG. 7, after completing formatting, the electronic device may boot from the static partition (B), that is, run in an operating system of V2.0 including the basic partition (Common), the static partition (B), and the dynamic partition (Super), and can further successfully load the user data partition (Userdata).

For example, the electronic device in the embodiments of this application includes but is not limited to a device such as a mobile phone, a headset, a tablet computer, a smart refrigerator, or a smart speaker in which an operating system can be installed. Alternatively, the electronic device may be a control board on which an operating system can be installed inside the electronic device. In addition, in the embodiments of this application, the operating system includes but is not limited to iOS, Android, Harmony, Windows, Linux, or another operating system.

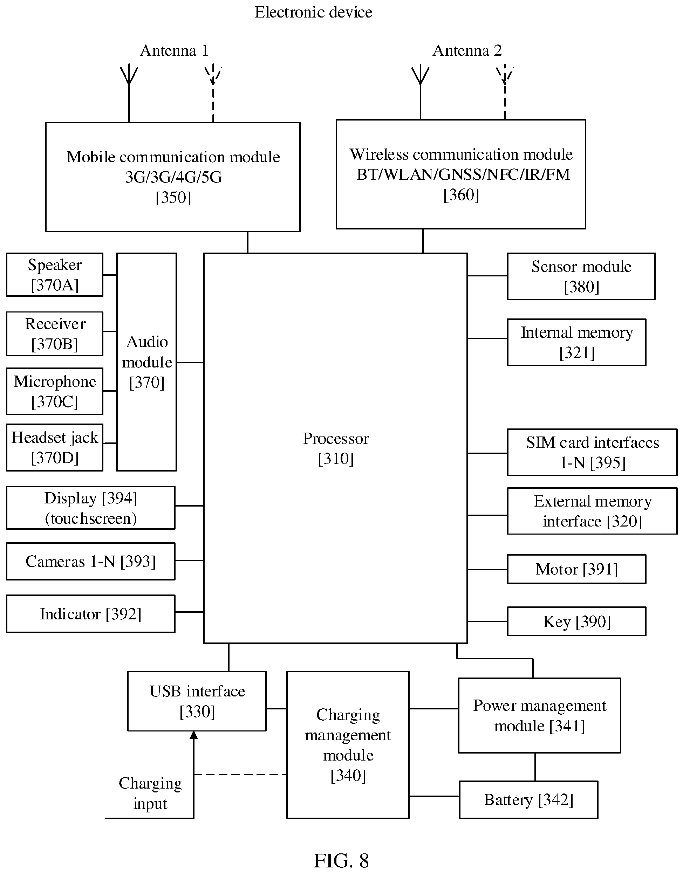

FIG. 8 is a diagram of a hardware structure of an electronic device according to an embodiment of this application. As shown in FIG. 8, an example in which the electronic device is a mobile phone is used. The electronic device may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a key 390, a motor 391, an indicator 392, a camera 393, a display 394, a subscriber identification module (subscriber identification module, SIM) card interface 395, and the like.

It may be understood that the structure shown in this embodiment does not constitute a specific limitation on the electronic device. In some other embodiments, the electronic device may include more or fewer components than those shown in the figure, combine some components, split some components, or have different component arrangements. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

It may be understood that an interface connection relationship between the modules shown in this embodiment is merely an example for description, and does not constitute a limitation on the structure of the electronic device. In some other embodiments, the electronic device may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input from a wired charger through the USB interface 330. In some embodiments of wireless charging, the charging management module 340 may receive a wireless charging input by using a wireless charging coil of the electronic device. The charging management module 340 may further supply power to the electronic device through the power management module 341 while charging the battery 342.

The power management module 341 is configured to be connected to the battery 342, the charging management module 340, and the processor 310. The power management module 341 receives an input from the battery 342 and/or the charging management module 340, to supply power to the processor 310, the internal memory 321, an external memory, the display 394, the camera 393, the wireless communication module 360, and the like. The power management module 341 may be further configured to monitor parameters such as a battery capacity, a quantity of battery cycles, and a battery health status (leakage or impedance). In some other embodiments, the power management module 341 may alternatively be disposed in the processor 310. In some other embodiments, the power management module 341 and the charging management module 340 may alternatively be disposed in a same device.

A wireless communication function of the electronic device may be implemented by using the antenna 1, the antenna 2, the mobile communication module 350, the wireless communication module 360, the modem processor, the baseband processor, and the like.

The wireless communication module 360 may provide a wireless communication solution including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device. The wireless communication module 360 may be one or more devices integrating at least one communication processing module. The wireless communication module 360 receives an electromagnetic wave through the antenna 2, modulates and filters an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave through the antenna 2 for radiation.

The electronic device implements a display function by using the GPU, the display 394, the application processor, and the like. The GPU is a microprocessor for image processing, and is connected to the display 394 and the application processor. The GPU is configured to perform mathematical and geometric calculation for graphics rendering. The processor 310 may include one or more GPUs that execute program instructions to generate or change display information.

The electronic device may implement a photographing function by using the ISP, the camera 393, the video codec, the GPU, the display 394, the application processor, and the like. The ISP is configured to process data fed back by the camera 393. The camera 393 is configured to capture a still image or a video. An optical image of an object is generated through a lens and is projected onto a photosensitive element. In some embodiments, the electronic device may include one or N cameras 393, where N is a positive integer greater than 1.

The external memory interface 320 may be configured to be connected to an external memory card, for example, a Micro SD card, to expand a storage capacity of the electronic device. The external memory card communicates with the processor 310 through the external memory interface 320, to implement a data storage function. For example, files such as music and videos are stored in the external memory card.

The internal memory 321 may be configured to store computer-executable program code, and the executable program code includes instructions. The processor 310 perform various functional applications and data processing of the electronic device by running the instructions stored in the internal memory 321. For example, the processor 310 may perform a rollback operation of an operating system by executing the instructions stored in the internal memory 321. The internal memory 321 may include a program storage area and a data storage area. The program storage area may store an operating system, an application required by at least one function (for example, a sound playing function or an image playing function), and the like. The data storage area may store data (for example, audio data and a phone book) and the like created during use of the electronic device. In addition, the internal memory 321 may include a high-speed random access memory, and may further include a nonvolatile memory, for example, at least one magnetic disk storage device, a flash memory device, and a universal flash storage (universal flash storage, UFS). It should be understood that the internal memory 321 may be disposed inside the processor 310, or the internal memory 321 may be independently disposed outside the processor 310.

In a specific implementation, the internal memory 321 may include a ROM and a RAM. In this application, the ROM may use a virtual A/B data storage structure.

The electronic device may implement an audio function, for example, music playing and recording, by using the audio module 370, the speaker 370A, the receiver 370B, the microphone 370C, the headset jack 370D, the application processor, and the like.

The key 390 includes a power key, a volume key, and the like. The key 390 may be a mechanical key, or may be a touch key. The electronic device may receive a key input and generate a key signal input related to user settings and function control of the electronic device. The motor 391 may generate a vibration prompt. The motor 391 may be configured to provide a vibration prompt for an incoming call, and may be further configured to provide vibration feedback for a touch. The indicator 392 may be an indicator light, and may be configured to indicate a charging status and a power change, or may be configured to indicate a message, a missed call, a notification, or the like. The SIM card interface 395 is configured to be connected to a SIM card. The SIM card may be inserted into the SIM card interface 395 or removed from the SIM card interface 395, to implement contact with or separation from the electronic device. The electronic device may support one or N SIM card interfaces, where N is a positive integer greater than 1.

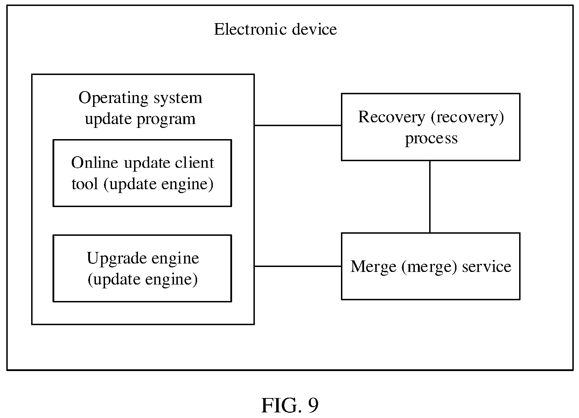

FIG. 9 is a schematic diagram of software composition of an electronic device according to this application. As shown in FIG. 9, an operating system update program used for upgrading an operating system is installed in the electronic device. Further, the operating system update program includes two functional modules: an online update client tool (online update client apk, ouc apk) and an upgrade engine (update engine). The ouc apk is configured to obtain an upgrade installation package (including a rollback package) of the operating system. The update engine is configured to perform an upgrade procedure of the operating system, for example, is configured to write system data into a ROM.

Still referring to FIG. 9, the electronic device further includes a recovery (recovery) process and a merge (merge) service. In this application, the recovery process may be used to launch the merge service, to complete merging into a dynamic partition (Super). In addition, the recovery process may further trigger restoration of factory settings, to format a user data partition (Userdata).

The operating system upgrade method provided in this application is first briefly described below with reference to the software composition shown in FIG. 9. When a rollback from an operating system of a version S to an operating system of a version R is required, the ouc apk may download a rollback package of the operating system of the version R. In a standby state, the update engine writes system data in the rollback package into a static partition and the user data partition (Userdata) in the ROM. After the system data is written, the electronic device may reboot and enter a recovery mode, that is, start the recovery process. The recovery process can launch the merge service, and the merge service merges the system data in the user data partition (Userdata) into the dynamic partition (Super). In addition, after merging is completed, the recovery process may format the user data partition (Userdata), so that the user data partition (Userdata) no longer stores data that needs to be decrypted for access. Finally, when the electronic device reboots, the static partition and the dynamic partition (Super) that store the system data of the version R can be successfully loaded, and the user data partition (Userdata) that does not need to be decrypted can be successfully loaded, so that the electronic device can successfully run in the operating system of the version R.

The operating system upgrade method provided in this application may be applied to an electronic device that has the foregoing software and hardware structures. The operating system rollback solution provided in this application is described below with reference to an actual upgrade scenario.

Scenario 1: There is a rollback from an operating system of a version S (that is, a first version) to an operating system of a version R (that is, a second version), and the version R is lower than the version S. That is, a rollback from an operating system of a higher version to an operating system of a lower version may also be referred to as a rollback scenario.

In the scenario 1, as shown in FIG. 6, an electronic device writes system data of the version R in a standby state; and in a recovery mode, completes merging into a dynamic partition (Super) and formats a user data partition (Userdata). Then, the electronic device reboots, and the electronic device may successfully run in the operating system of the version R.

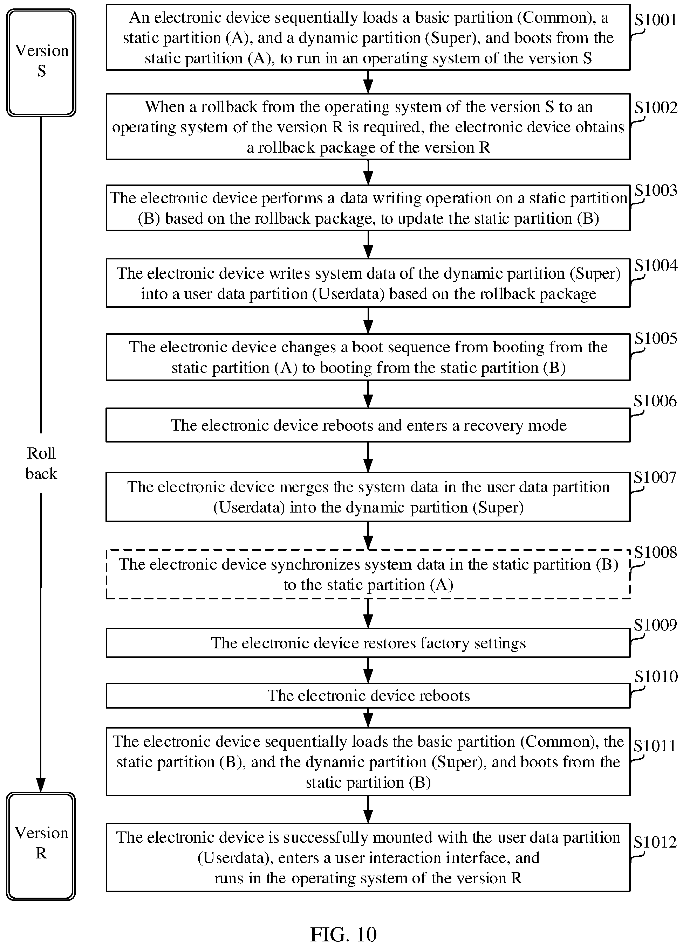

Referring to FIG. 10, an example in which the electronic device currently boots from a static partition (A) is used. In the scenario 1, a process of rolling back from the operating system of the version S to the operating system of the version R includes the following steps.

S1001: The electronic device sequentially loads a basic partition (Common), the static partition (A), and the dynamic partition (Super), and boots from the static partition (A), to run in the operating system of the version S.

For ease of description, in the scenario 1, the static partition (A) may be referred to as a first static partition, and a static partition (B) may be referred to as a second static partition.

S1002: When the rollback from the operating system of the version S to the operating system of the version R is required, the electronic device obtains a rollback package of the version R.

When a user needs to roll back the operating system of the version S currently running in the electronic device to the operating system of the version R, the user may perform a rollback request operation on the electronic device. In response to the rollback request operation, the electronic device may send a package search request to a server, to request to obtain the rollback package (that is, a first installation package) of the version R, that is, request to obtain an installation package of the operating system of the version R.

The electronic device may display a first interface that includes a rollback control (which may also be referred to as a first control), and the rollback control is used to trigger the electronic device to request the rollback package of the version R from the server. The electronic device may request the rollback package of the version R from the server in response to a preset operation (for example, a tap operation or a touch and hold operation, which may also be referred to as a first operation) performed by the user on the rollback control. That is, the rollback request operation is a preset operation on the rollback control.

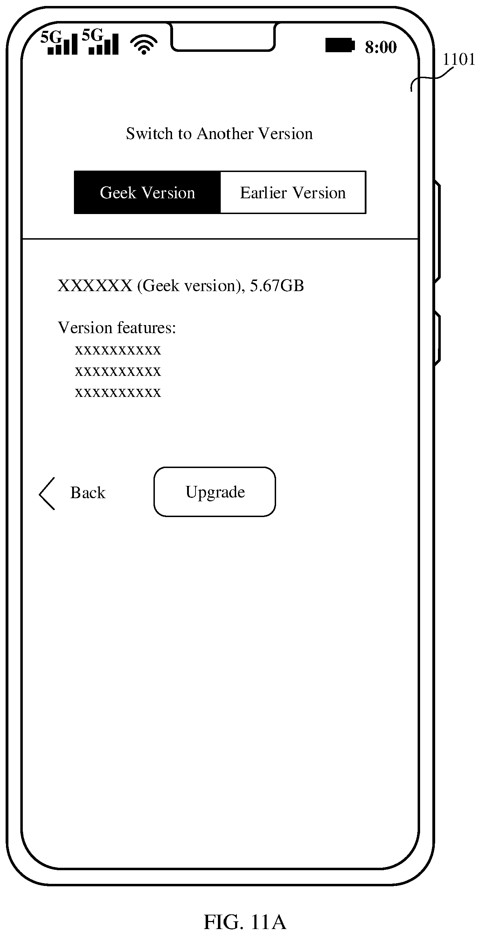

For example, the electronic device is a mobile phone. A preset application (for example, a mobile phone assistant application and a settings application) is installed in the mobile phone. The preset application may be used to manage an operating system installed in the mobile phone, for example, management such as an upgrade and a rollback of the operating system. The mobile phone may display an interface 1101 shown in FIG. 11A, and the interface 1101 is an application interface of the mobile phone assistant application. The interface 1101 includes two options: "Geek Version" and "Earlier Version". If the user selects "Geek Version", the mobile phone may request an upgrade package of the geek version (or may be understood as a public beta version) from the server. If the user selects "Earlier Version", the mobile phone may request the rollback package of the version R from the server. That is, the rollback control is "Earlier Version", and the preset operation on the rollback control is a selection operation on "Earlier Version" in the interface 1101. In response to the selection operation performed by the user on "Earlier Version" in the interface 1101, the mobile phone may send a package search request to the server, to request the rollback package of the version R.

After receiving the package search request, the server may determine the version R based on request information carried in the package search request. The request information includes a version number of the version S (that is, a version currently running in the electronic device); and may further include a device identifier and/or district information. The following describes a specific implementation in which the electronic device determines the version R based on the version number of the version S, the device identifier, and the district information.

Manner 1: The server determines the version R based on the version number of the version S.

The server may determine a version lower than the version S as the version R based on the version number of the version S. For example, if the version S is V3.0, and V2.0 is lower than V3.0, V2.0 may be determined as the version R.

In a specific implementation, to avoid a rollback to an operating system that is excessively old, a rollback to an operating system having a vulnerability, or the like, the server may record a correspondence between a version number before a rollback and a version number to which a rollback can be implemented. The version number to which a rollback can be implemented is a version number (which may also be referred to as a version number of a preset version) that is of an operating system having a relatively small vulnerability, that is earlier than the version number before a rollback, and that is relatively close to the version number before a rollback. For example, the server records a correspondence shown in Table 1 below:

**Table 1**

| Version number before a rollback | Version number to which a rollback can be implemented |
|---|---|
| V1.1 | V1.0 |
| V2.3 | V2.2 |
| V3.2 | V3.1 |

Table 1 shows that V1.1 can be rolled back to V1.0, V2.3 can be rolled back to V2.2, and V3.2 can be rolled back to V3.1.

Therefore, after receiving the package search request, the server queries a version number that corresponds to a version number carried in the package search request and to which a rollback can be implemented, to determine a rollback version. For example, if the version number carried in the package search request is V2.3, it is determined, by querying Table 1, that the version number to which a rollback can be implemented is V2.2, that is, the version R is V2.2.

In the manner 1, a version lower than the version S may be determined as the version R.

Manner 2: The server determines the version R based on the version number of the version S and the device identifier.

The device identifier includes information such as a device name, a device model, or a product serial number (Serial Number, SN).

Specifically, to avoid a rollback to a version that was never used by the user, the server may determine a version that is lower than the version S and that is higher than a version installed when the electronic device is delivered from a factory as the version R based on the version number of the version S and the device identifier. The server may query, based on the device identifier, the version installed when the electronic device is delivered from the factory, and a version lower than the version installed when the electronic device is delivered from the factory is considered as a version that was not used once by the user.

For example, an operating system installed when a mobile phone A is delivered from a factory is V2.0, and V1.1 and V1.0 are lower than V2.0. That is, an operating system of V1.1 and an operating system of V1.0 should not be installed once in the mobile phone A. In addition, the version S currently running in the electronic device is V3.2, and V3.2 is higher than V2.0, V1.1, and V1.0. In this case, the server may determine a version lower than V3.2 but higher than V2.0 as the version R, for example, determine a version such as V2.1 or V3.0 as the version R, and does not determine V1.1 or V1.0 as the version R. In the manner 2, a version that is lower than the version S and that was used once by the user may be determined as the version R.

Manner 3: The server determines the target version R based on the version number S and a district identifier.

The district information may be information indicating an area in which the electronic device is used, for example, an area name, longitude and latitude information, and a mobile network code (MCCMNC). For example, the district information may be a city C or a city D. The use area may be obtained by locating the electronic device, or may be entered by the user. This is not specifically limited in this embodiment of this application.

In practice, an operating system provider may provide different versions of operating systems for electronic devices used in different areas, for example, a domestic version and an overseas version. Based on this, to avoid a rollback to a version that cannot be used in the area in which the electronic device is used, the server may determine a version that is lower than the version S and that can be used in the area in which the electronic device is used as the version R based on the version number of the version S and the district information. The server may query, based on the district information, a version that can be used in the area in which the electronic device is used.

For example, versions of operating systems that can be installed in a mobile phone domestically used include V3.1 and V3.2, and a version of an operating system that can be installed in a mobile phone used overseas includes V3.3. That is, an operating system of the version V3.3 cannot be installed in the mobile phone domestically used, and operating systems of V3.1 and V3.2 cannot be installed in the mobile phone used overseas. In addition, the district information of the electronic device shows that the electronic device is domestically used, the currently running version S is V4.0, and V4.0 is higher than V3.1, V3.2, and V3.3. In this case, the server may determine, as the version R, a version that is lower than V4.0 and that can be domestically used, for example, determine a version such as V3.1 or V3.2 as the version R, and does not determine V13.3 as the version R.

In the manner 3, a version that is lower than the version S and that is allowed to be installed in the area in which the electronic device is used may be determined as the version R.

Certainly, the server may alternatively combine the manner 2 and the manner 3, to determine a version that is lower than the version S, that was used once by the user, and that is allowed to be installed in the area in which the electronic device is used as the version R.

It should be noted herein that the server may determine one or more versions R. If there are a plurality of versions R, the server may select one from the plurality of versions R, for example, select a latest version from the plurality of versions R; or the server may send the plurality of versions R to the electronic device, so that the user selects one from the plurality of versions R. This is not specifically limited in this embodiment of this application. An example in which one version R is determined is mainly used below for description.

After determining the version R, the server may feed back a download address of the installation package (that is, the rollback package) of the version R to the electronic device. The electronic device may download the rollback package based on the download address, to obtain the rollback package.

In some embodiments, the rollback package further includes version information of the version R. After obtaining the rollback package, the electronic device may display a second interface that includes the version information of the version R. The version information includes information such as a version name, a version size, version features, and update precautions. This helps the user understand the version R and determine whether a rollback is required.

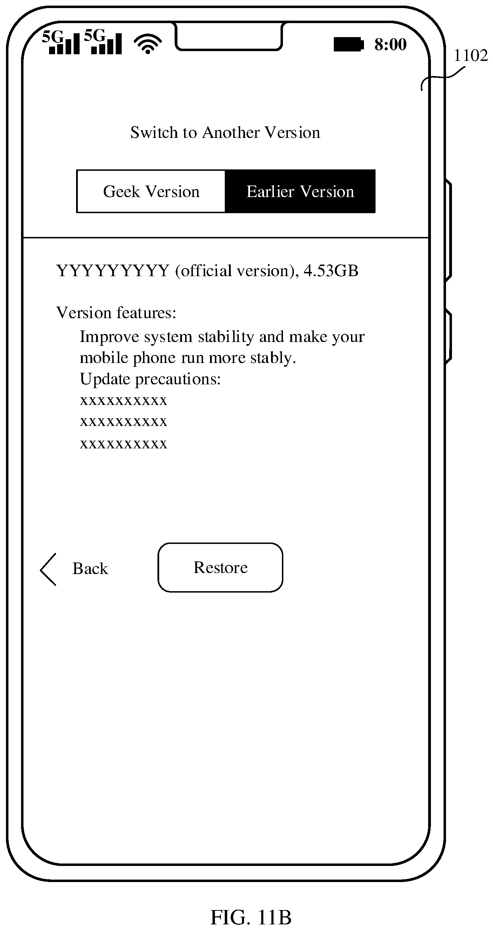

Still referring to FIG. 11A and FIG. 11B, after sending the package search request to the server in response to the selection operation performed by the user on "Earlier Version" in the interface 1101, and obtaining the rollback package, the mobile phone may display an interface 1102 shown in FIG. 11B. The interface 1102 is also an application interface of the mobile phone assistant application. The interface 1102 includes the version information of the version R, for example, the version name "YYYYYYYYY (official version)", the version size "4.53GB", and the version features "Improve system stability and make your mobile phone run more stably".

In addition, the second interface includes a restoration control (which may also be referred to as a second control), and the restoration control is used to trigger the electronic device to roll back the operating system to the version R, that is, is used to trigger the electronic device to install the operating system of the version R. In response to a preset operation (for example, a tap operation or a touch and hold operation, which may also be referred to as a second operation) performed by the user on the restoration control, the electronic device may start to perform an operation of rolling back to the version R, for example, perform the following step S1003 and subsequent steps.

Still referring to FIG. 11A and FIG. 11B, the restoration control is a "Restore" button in the interface 1102 shown in FIG. 11B. In response to a tap operation performed by the user on the "Restore" button in the interface 1102, the mobile phone may start to perform an operation of rolling back to the version R. That is, the preset operation on the restoration control is the tap operation on the "Restore" button in the interface 1102.

Certainly, in some other embodiments, after obtaining the rollback package, the electronic device may directly start to perform an operation of rolling back to the version R.

S1003: The electronic device performs a data writing operation on the static partition (B) based on the rollback package, to update the static partition (B).

The rollback package includes full system data of the operating system of the version R, and further includes system data (which may also be referred to as first system data) that needs to be stored in a static partition and system data (which may also be referred to as second system data) that needs to be stored in the dynamic partition (Super).

In S 1003, the electronic device may write the system data that is in the rollback package and that needs to be stored in the static partition into the static partition (B), so that some system data required for the version R is stored in the static partition (B). In addition, because the electronic device currently boots from the static partition (A), writing the system data into the static partition (B) does not affect running of the current version S.

S1004: The electronic device writes system data of the dynamic partition (Super) into the user data partition (Userdata) based on the rollback package.

In S 1004, the electronic device may write the system data that is in the rollback package and that needs to be stored in the dynamic partition (Super) into the user data partition (Userdata), so that the user data partition (Userdata) stores the other system data required for the version R. In addition, the electronic device writes the system data into the user data partition (Userdata) instead of the dynamic partition (Super), which does not affect running of the current version S.

In some embodiments, the electronic device may create a virtual dynamic partition in the user data partition (Userdata), and write the system data of the dynamic partition (Super) into the virtual dynamic partition.

In the virtual dynamic partition in the user data partition (Userdata), the electronic device may use a copy-on-write (Copy-On-Write, cow) file to store the system data. A plurality of cow files may be stored in the virtual dynamic partition, and each cow file corresponds to one sub-partition in the dynamic partition (Super). That is, one cow file stores system data that needs to be stored in one sub-partition in the dynamic partition (Super).

In addition, a name of the cow file corresponds to the sub-partition that is in the dynamic partition (Super) and that corresponds to the cow file. In the rollback package, a cow file of the system data of the dynamic partition (Super) is compressed and stored in a form of binary code, and each cow file is named based on a sub-partition that is in the dynamic partition (Super) and that corresponds to the cow file. For example, a cow file corresponding to a system sub-partition is named system-cow-img.img.0000.

In S1004, the electronic device parses the rollback package to obtain all cow files, and adds an A/B partition mark to each cow file. Specifically, when the electronic device currently boots from the static partition (A), it may be understood that a dynamic partition (Super) loaded by the electronic device for currently running the operating system is a dynamic partition (A). In this case, the system data stored in the virtual dynamic partition is for a dynamic partition (B). Therefore, a name mark _b corresponding to the dynamic partition (B) is added to the cow file. For example, _b is added to system-cow-img.img.0000 to generate system_b-cow-img.img.0000.

After the cow file is written into the virtual dynamic partition, the electronic device changes merging status information in a metadata (metadata) sub-partition in the basic partition (Common) from "merged (merged)" to "wait for merge (wait for merge)". The merging status information is used to indicate whether there is currently a cow file that needs to be merged into the dynamic partition (Super). Specifically, the merging status information includes an overall identifier for the dynamic partition (Super) and a sub-partition identifier for each sub-partition in the dynamic partition (Super). When the overall identifier is "merged (merged)", it indicates that a merging operation needs to be performed on none of all sub-partitions in the dynamic partition (Super). When the overall identifier is "wait for merge (wait for merge)", it indicates that a merging operation needs to be performed on one or more sub-partitions in the dynamic partition (Super). When the sub-partition identifier is "merged (merged)", it indicates that a merging operation does not need to be performed on the sub-partition. When the sub-partition identifier is "wait for merge (wait for merge)", it indicates that a merging operation needs to be performed on the sub-partition. That is, that the electronic device changes merging status information in a metadata (metadata) sub-partition in the basic partition (Common) from "merged (merged)" to "wait for merge (wait for merge)" includes: changing the overall identifier to "wait for merge", and changing the sub-partition identifier for each sub-partition to "wait for merge".

After the cow file is written into the virtual dynamic partition, the electronic device may further create an index of the cow file. The index of the cow file is used to indicate a name of the cow file and/or a storage location of the cow file in the virtual dynamic partition. The index of the cow file may be used by the electronic device to subsequently read the cow file from the virtual dynamic partition. For example, the electronic device may create the index of the cow file in the metadata sub-partition. Subsequently, the electronic device may read the cow file based on the index of the cow file in the metadata sub-partition.

S1005: The electronic device changes a boot sequence from booting from the static partition (A) to booting from the static partition (B).

The electronic device currently boots from the static partition (A), that is, the boot sequence is booting from the static partition (A). After changing the boot sequence from booting from the static partition (A) to booting from the static partition (B), the electronic device may boot from the static partition (B) at next boot, to run in the operating system of the version R.

For example, a universal flash storage (Universal Flash Storage, UFS) in a master boot record (Master Boot Record, MBR) format is used. A device boot sequence description is stored in an MBR (a master boot sector, a first sector of the UFS, that is, cylinder 0 head 0 sector 1 in a C/H/S address) of the UFS. For example, a boot sequence flag A indicates booting from the static partition (A); and a boot sequence flag B indicates booting from the static partition (B). After the device boots, the device boot sequence is first read from the MBR of the UFS, to determine whether the device needs to boot from the static partition (A) or the static partition (B). Therefore, the electronic device may overwrite the boot sequence flag in the MBR from A to B.

It should be understood that changing the boot sequence from booting from the static partition (A) to booting from the static partition (B) merely indicates that the electronic device boots from the static partition (B) next time, and this does not take effect immediately. This takes effect only at next boot (for example, reboot).

In addition, an execution occasion of S1005 is not limited to that shown in FIG. 10. In actual implementation, it is appropriate provided that the boot sequence is changed before the electronic device boots next time (for example, before the electronic device reboots in S1006).

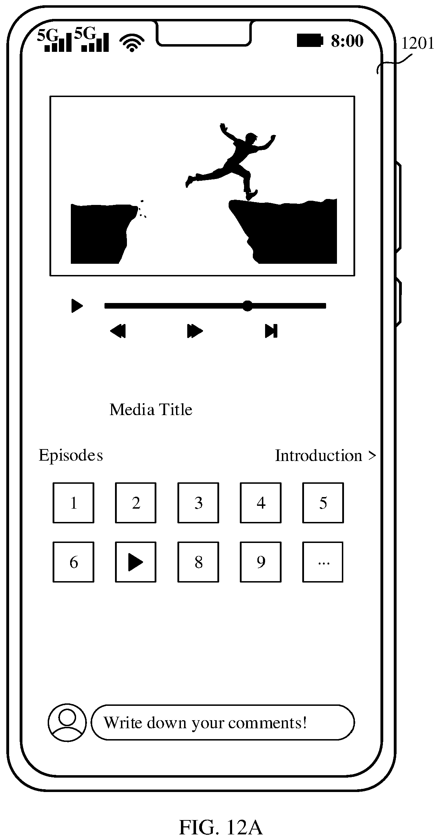

It should be noted herein that in a process of performing S1003-S1005, the electronic device is in the standby state, that is, the electronic device may display a third interface for normal use by the user. For example, in the process of performing S1003-S1005, the electronic device may normally display an interface 1201 shown in FIG. 12A. The interface 1201 is a video play interface, and the user can normally watch a video.

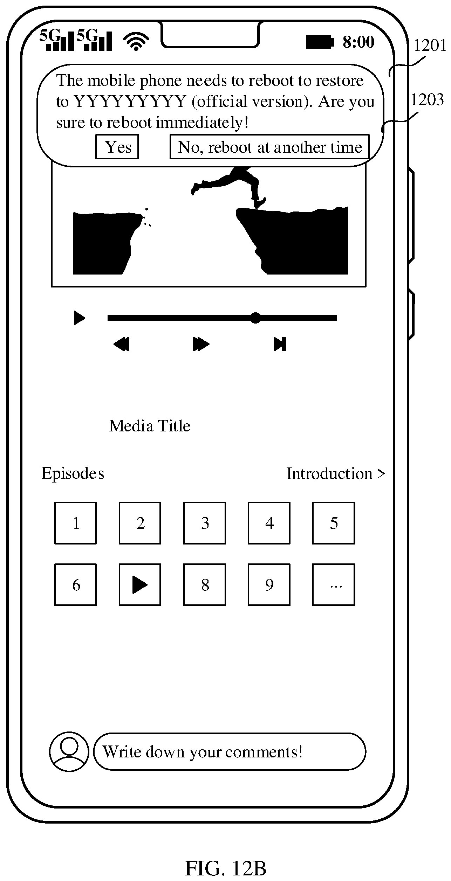

In some embodiments, after performing S1003-S1005, the electronic device may send prompt information, to prompt that the electronic device needs to reboot to roll back to the version R. For example, after performing S1003-S1005, the mobile phone may display an interface 1202 shown in FIG. 12B. The interface 1202 includes prompt information 1203. The prompt information 1203 is specifically "The mobile phone needs to reboot to restore to YYYYYYYYY (official version). Are you sure to reboot immediately!", to prompt the user that the mobile phone needs to reboot to roll back to the YYYYYYYYY version (official version).

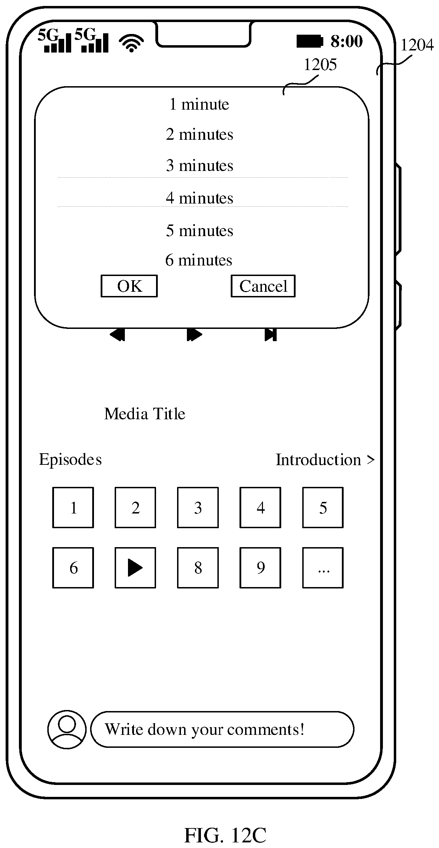

Then, the electronic device may perform the following step S1006 only after detecting a reboot confirmation operation, to continue to complete the operation of rolling back to the version R. For example, the prompt information is the prompt information 1203 in the interface 1202 shown in FIG. 12B, and the prompt information 1203 further includes two options: "Yes" and "No, reboot at another time". The reboot confirmation operation may be a selection operation performed by the user on the option "Yes". In response to the selection operation performed by the user on the option "Yes" in the prompt information 1203 in the interface 1202, the mobile phone may start to perform the following step S1006. Alternatively, the reboot confirmation operation may be an operation of selecting a reboot time by the user. For example, in response to a selection operation performed by the user on the option "No, reboot at another time" in the prompt information 1203 in the interface 1202, the mobile phone may display an interface 1204 shown in FIG. 12C. The interface 1204 includes a time selection pop-up window 1205, and the time selection pop-up window 1205 includes a plurality of time options, for example, 1 minute, 2 minutes, and 3 minutes. The operation of selecting a reboot time may be an operation of selecting any time option (for example, 4 minutes) in the time selection pop-up window 1205 and tapping "OK" by the user. In response to the operation of selecting a reboot time by the user, the electronic device may start to perform the following step S1006 after the selected time arrives.

In this embodiment, the electronic device may reboot the electronic device only after the user confirms reboot, and continue to complete the operation of rolling back to the version R.

Certainly, in some other embodiments, after performing S1003-S1005, the electronic device may immediately perform S1006 without confirmation by the user. This is not specifically limited in this embodiment of this application.

S1006: The electronic device reboots and enters the recovery mode.

In this application, the electronic device needs to merge (merge) the system data in the user data partition (Userdata) into the dynamic partition (Super) in the recovery mode. Therefore, at the current reboot, the electronic device further needs to be triggered to enter the recovery mode. For example, the electronic device may control, by using the following reboot instruction, the electronic device to reboot and enter the recovery mode:
property_set(ANDROID_RB_PROPERTY, "reboot, recovery").

In addition, because the boot sequence is changed from booting from the static partition (A) to booting from the static partition (B), the electronic device boots from the static partition (B) at reboot and enters the recovery mode. To ensure normal running of the recovery mode, the electronic device needs to load sub-partitions, for example, a recovery sub-partition and a boot sub-partition, that are in the basic partition (Common) and the static partition (B) and that are required for maintaining the normal running of the recovery mode.

It should be noted that regardless of whether the electronic device obtains a rollback package for a rollback from the version S to the version R or an upgrade package for an upgrade from the version R to the version S, the electronic device does not make a distinction for the rollback package or the upgrade package, but performs processing based on the processing procedure in S1001-S1005.

However, in a conventional process of an upgrade from the operating system of the version R to the operating system of the version S, after normal reboot, the system data in the user data partition (Userdata) may be merged (merge) into the dynamic partition (Super). During the upgrade from the operating system of the version R to the operating system of the version S, the electronic device needs to reboot and enter the recovery mode, and in the recovery mode, merges (merge) the system data in the user data partition (Userdata) into the dynamic partition (Super). That is, in the scenario 1 of rolling back from the version S (S) to the version R (R), the electronic device needs to reboot and enter the recovery mode.

Based on this, in some embodiments, after performing S1001-S1005, the electronic device needs to determine whether the currently obtained package is a rollback package, and performs S1006 only after determining that the currently obtained package is a rollback package, to merge (merge) the system data in the user data partition (Userdata) into the dynamic partition (Super) in the recovery mode.

In a specific implementation, the electronic device may compare a version number carried in the installation package with a version number of an operating system currently running in the electronic device. The installation package includes the rollback package for the rollback from the version S to the version R or the upgrade package for the upgrade from the version R to the version S.

If the installation package is a rollback package, the installation package carries a version number (which may also be referred to as a first version number) of the version R, and the version number of the operating system currently running in the electronic device is the version number (that is, a second version number) of the version S. The version R is lower than the version S. Correspondingly, the version number of the version R is lower than the version number of the version S. That is, if the installation package is a rollback package, the rollback package should be used to install an operating system of a version lower than the version (that is, the version S) currently running in the electronic device, and the version number carried in the installation package is lower than the version number of the operating system currently running in the electronic device.

If the installation package is an upgrade package, the installation package carries the version number of the version S, and the version number of the operating system currently running in the electronic device is the version number of the version R. The version S is higher than the version R. Correspondingly, the version number of the version S is higher than the version number of the version R. That is, if the installation package is an upgrade package, the version number carried in the installation package is higher than the version number of the operating system currently running in the electronic device.

Therefore, in this implementation, if the version number carried in the installation package is lower than the version number of the operating system currently running in the electronic device, the electronic device may determine that the installation package is a rollback package; and if the version number carried in the installation package is higher than the version number of the operating system currently running in the electronic device, the electronic device may determine that the installation package is an upgrade package.

In addition, if the version number carried in the installation package is equal to the version number of the operating system currently running in the electronic device, it indicates that the installation package is incorrect, and processing for the installation package is stopped.

Certainly, in actual implementation, the implementation of determining the rollback package through comparison between the version numbers is not used as an example. A person skilled in the art may distinguish between the rollback package and the upgrade package based on an actual requirement. For example, the server may add a rollback mark to the rollback package. The electronic device may determine, by identifying whether the installation package includes the rollback mark, whether the installation package is a rollback package.

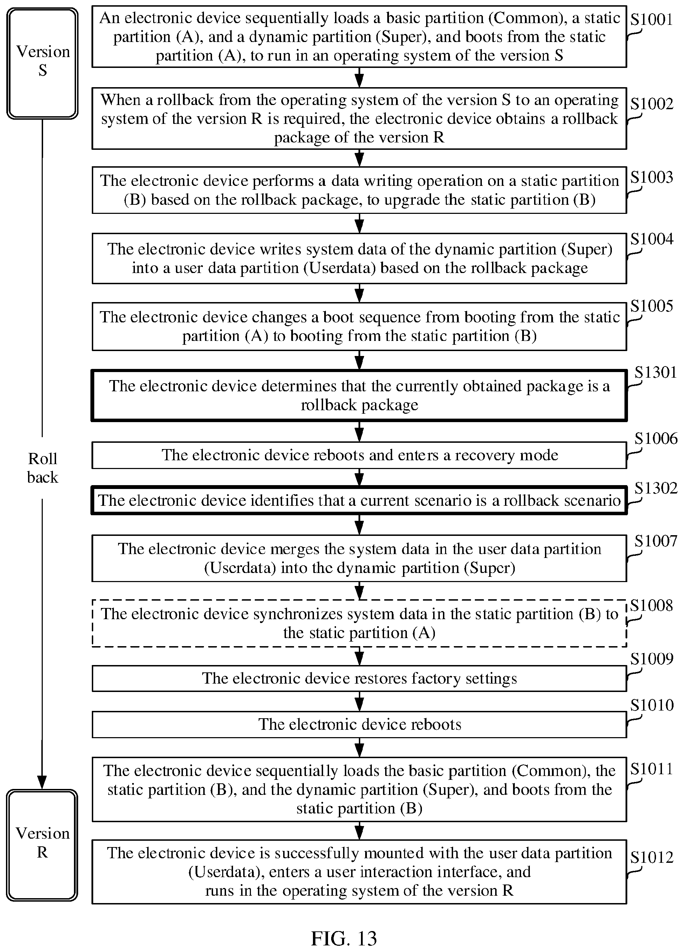

Correspondingly, referring to FIG. 13, before S1006, S1301 is further included:

S1301: The electronic device determines that the currently obtained package is a rollback package.

It is determined that the currently obtained package is a rollback package, that is, it is determined that a scenario is the scenario 1 of rolling back from the version S to the version R.

That is, in this embodiment, only when it is determined that the obtained package is a rollback package, the electronic device reboots and enters the recovery mode, to avoid a case in which when the obtained package is an upgrade package, the recovery mode is incorrectly entered.

In the scenario 1, after entering the recovery mode, the electronic device may perform the following steps S1007-S1009 in the recovery mode, to continue to complete processing of rolling back to the version R.

S1007: The electronic device merges the system data in the user data partition (Userdata) into the dynamic partition (Super).

In the description of this embodiment of this application, the merging operation means to write the system data (cow file) that is of the dynamic partition (Super) and that is stored in the user data partition (Userdata) into the dynamic partition (Super), to update data in a file in the dynamic partition (Super), so that when the electronic device boots next time, the electronic device can boot by loading the dynamic partition (Super).

In some embodiments, after entering the recovery mode, the electronic device may read the merging status information and the index of the cow file, and complete merging processing based on the merging status information and the index of the cow file.

By reading the merging status information, the electronic device may determine whether a cow file corresponding to a corresponding sub-partition needs to be retrieved from the user data partition (Userdata). Specifically, when it is learned, through reading, that the overall identifier in the merging status information is "merged", it is determined that cow files corresponding to all the sub-partitions do not need to be retrieved from the user data partition (Userdata). When it is learned, through reading, that the overall identifier in the merging status information is "wait for merge", the sub-partition identifier for each sub-partition in the merging status information may be further read. If the sub-partition identifier is "merged", it is determined that the cow file corresponding to the corresponding sub-partition does not need to be retrieved from the user data partition (Userdata). If the sub-partition identifier is "wait for merge", it is determined that the cow file corresponding to the corresponding sub-partition needs to be retrieved from the user data partition (Userdata).

Then, by reading the index of the cow file, the electronic device may obtain the file name and/or the storage location of the cow file, to retrieve the corresponding cow file from the user data partition (Userdata).

Finally, the electronic device writes the cow file retrieved from the user data partition (Userdata) into a corresponding sub-partition in the dynamic partition (Super), to complete merging processing of the dynamic partition (Super).

In S1007, the system data stored in the user data partition (Userdata) can be merged (merge) into the dynamic partition (Super), so that the dynamic partition (Super) stores the system data of the version R, to ensure that the operating system of the version R can be subsequently successfully run.

In practice, if the recovery mode is entered, a plurality of types of processing of data or the operating system inside the electronic device may be completed. For example, a standard of the electronic device is modified, and a demo standard is modified to a commercial standard. For another example, the recovery mode is used to adjust a partition table. For still another example, in this application, the recovery mode is used to complete processing of rolling back from the version S to the version R.

Based on this, in some embodiments, after entering the recovery mode, the electronic device first needs to determine an objective of entering the recovery mode this time, to help accurately perform corresponding processing to achieve the objective. In this case, in this application, it needs to be determined whether a current scenario is a rollback scenario, to help accurately perform the processing of rolling back from the version S to the version R.

In a specific implementation, after determining, in S1301, that the currently obtained package is a rollback package, the electronic device may write a preset identifier used to indicate that the current scenario is a rollback scenario into a sub-partition A (which may also be referred to as a preset sub-partition). The sub-partition A is a partition accessible in the recovery mode. For example, the sub-partition A is a Misc sub-partition in the basic partition (Common).

In this case, after entering the recovery mode, the electronic device may read the preset identifier from the sub-partition A. If the preset identifier is read, it is determined that the current scenario is a rollback scenario. If the preset identifier is not read, it is determined that the current scenario is not a rollback scenario.

For example, in the scenario 1, after determining, in S1301, that the currently obtained package is a rollback package, the electronic device may write the preset identifier into the sub-partition A. Correspondingly, after S1006, if the electronic device reads the preset identifier from the sub-partition A, it may be determined that the current scenario is a rollback scenario.

Certainly, in actual implementation, the manner of determining, by reading the preset identifier from the sub-partition A, whether the current scenario is a rollback scenario constitutes no limitation. A person skilled in the art may identify the rollback scenario by using a corresponding technology based on an actual requirement. For example, before rebooting and entering the recovery mode, the electronic device may store the installation package in a preset directory accessible in the recovery mode. After the recovery mode is entered, the installation package may be parsed out from the preset directory. If the installation package includes a rollback indication, it is determined that the current scenario is a rollback scenario. If the installation package includes no rollback identifier, it is determined that the current scenario is not a rollback scenario.

Correspondingly, still referring to FIG. 13, after the recovery mode is entered, before S1007, S1302 is further included:
S1302: The electronic device identifies that the current scenario is a rollback scenario.

That is, in this embodiment, only when it is identified that the scenario is a rollback scenario, merging (merge) and subsequent processing are further performed, to avoid a case in which in a scenario in which no rollback is required, processing such as merging is incorrectly performed in the recovery mode, and finally system running is affected.

S1008: The electronic device synchronizes the system data in the static partition (B) to the static partition (A).

In some embodiments, after completing merging (merge), the electronic device may further synchronize system data stored in each sub-partition in the static partition (B) to a corresponding sub-partition in the static partition (A), so that the static partition (A) also stores the system data of the version R. In this case, when subsequently booting from the static partition (A), the electronic device can run the operating system of the version R.

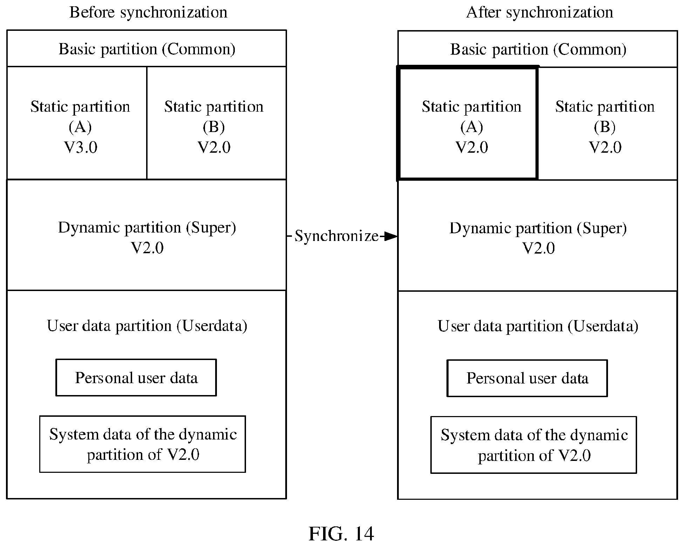

For example, referring to FIG. 14, before synchronization, the static partition (A) stores system data of the version V3.0, and the static partition (B) stores system data of the version V2.0. The system data of the version V2.0 in the static partition (B) can be synchronized to the static partition (A) through synchronization, so that the static partition (A) also stores the system data of the version V2.0. Still referring to FIG. 14, after synchronization, both the static partition (A) and the static partition (B) include the system data of the version v2.0.

S1009: The electronic device restores factory settings.

The restoring factory settings includes formatting the user data partition (Userdata), a cache sub-partition and the metadata sub-partition in the basic partition (common), and the like.

After completing merging (merge) processing, the electronic device restores the factory settings, to format the user data partition (Userdata), so that the user data partition (Userdata) no longer stores data that needs to be decrypted for access.

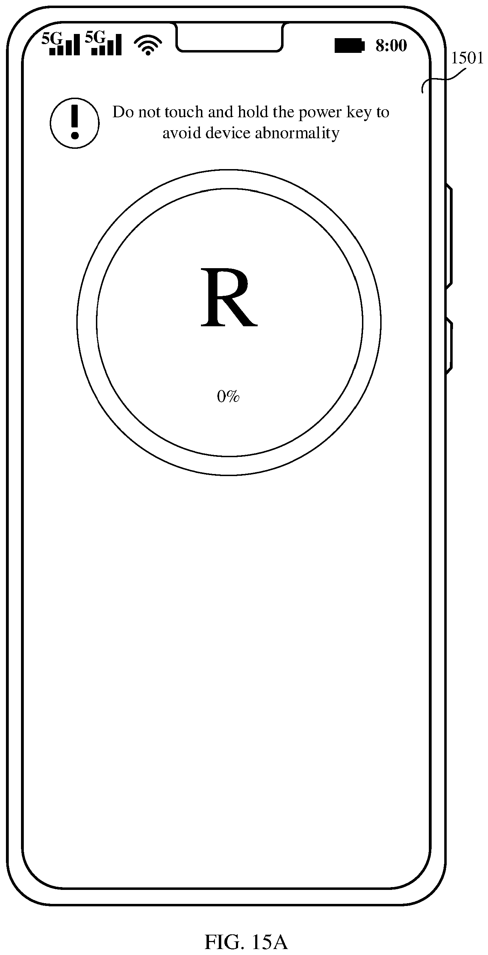

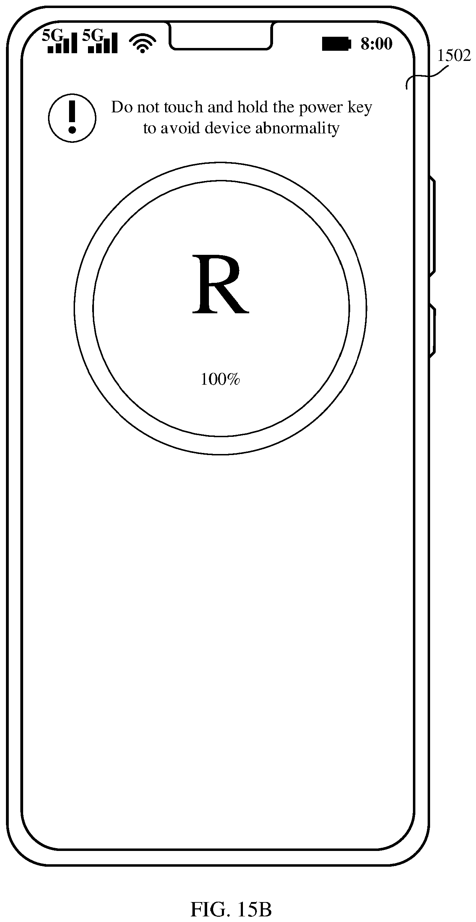

In this case, it should be noted that different from the standby state, the electronic device cannot be normally used in the recovery mode. For example, after rebooting and entering the recovery mode, the mobile phone may display an interface 1501 (which may also be referred to as a fourth interface) shown in FIG. 15A. The interface 1501 includes progress (which may also be referred to as progress prompt information) of rolling back to the version R in the recovery mode, that is, execution of progress of S1007-S1009. For example, the progress displayed in the interface 1501 is 0%. In addition, when the progress reaches 100% in an interface 1502 shown in FIG. 15B, it indicates that execution of S1007-S1009 is completed. Both the interface 1501 and the interface 1502 are inoperable and cannot be normally used by the user.

In the recovery mode, after performing S1007-S1009, the electronic device may perform the following step S1010, so that the electronic device can run in the operating system of the version R.

S1010: The electronic device reboots.

For example, the electronic device may control, by using the following reboot instruction, the electronic device to reboot:
property_set(ANDROID_RB_PROPERTY, "reboot").

It should be noted that different from the reboot in S 1006, the reboot in S 1010 is normal reboot. Therefore, after the reboot, the electronic device enters a normal use state, and does not enter the recovery mode.

S1011: The electronic device sequentially loads the basic partition (Common), the static partition (B), and the dynamic partition (Super), and boots from the static partition (B).

Because the boot sequence is changed to booting from the static partition (B), the electronic device boots from the static partition (B).

S1012: The electronic device is successfully mounted with the user data partition (Userdata), enters a user interaction interface, and runs in the operating system of the version R.

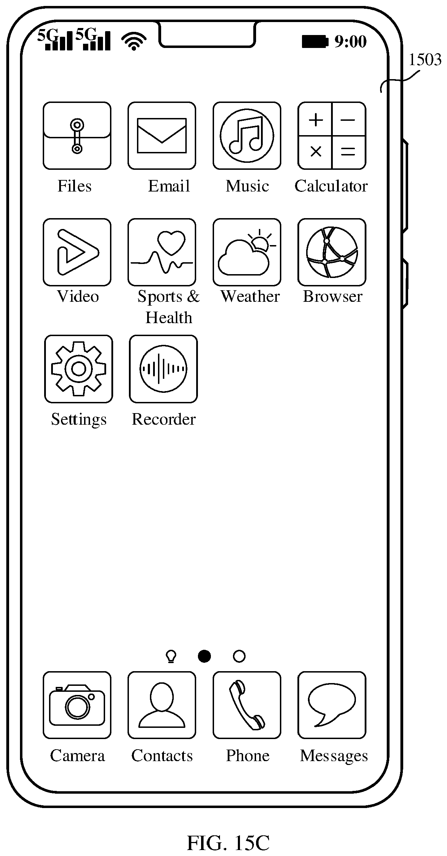

Both the static partition (B) and the dynamic partition (Super) store the system data of the version R. Therefore, loading the static partition (B) and the dynamic partition (Super) is equivalent to that the operating system of the version R can be loaded. In addition, the user data partition (Userdata) no longer stores the data that needs to be decrypted for access, and there is no problem that loading cannot be performed. Therefore, the electronic device can successfully boot. Finally, the electronic device can successfully run in the operating system of the version R. For example, after booting from the static partition (B), the electronic device may display an interface 1503 shown in FIG. 15C. The interface 1503 is a mobile phone home screen.

With reference to software composition of the electronic device, the following further describes a specific implementation of a process from downloading the rollback package (for example, S1002 in FIG. 10 and FIG. 13) to completing the rollback (for example, S1010 in FIG. 10 and FIG. 13) in the scenario 1.

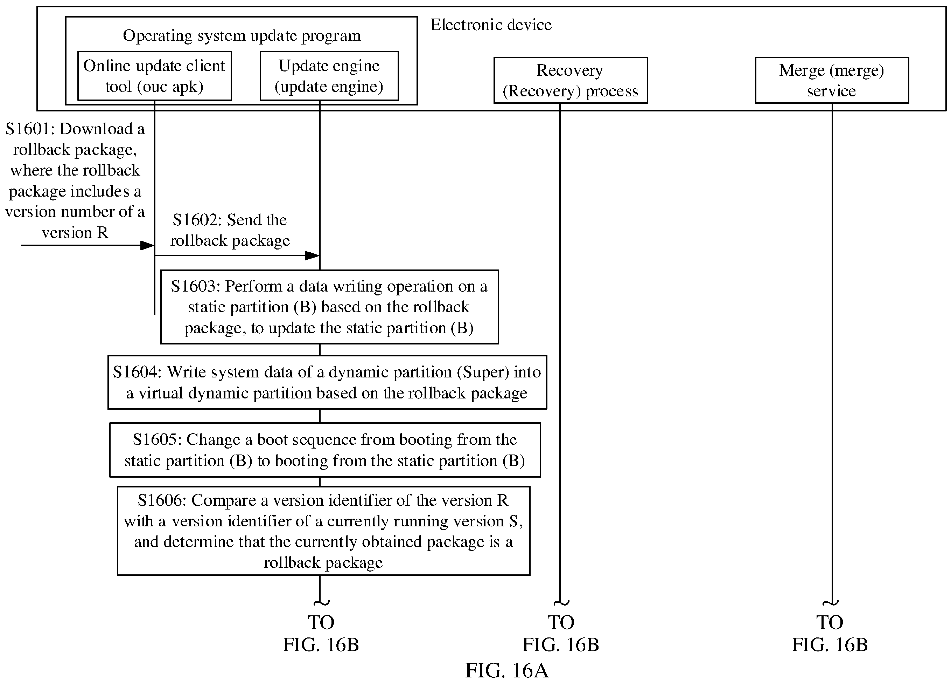

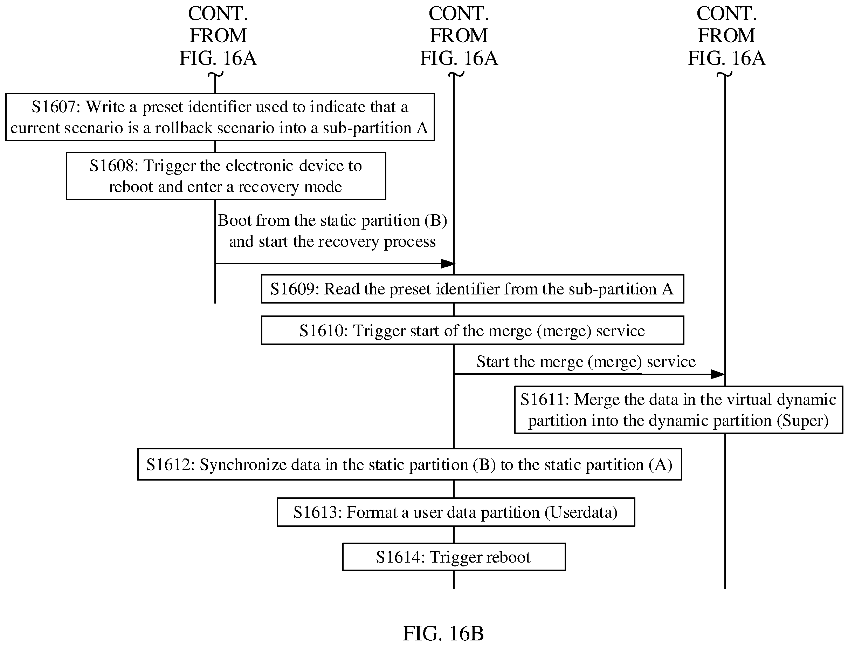

Specifically, referring to FIG. 16A and FIG. 16B, a specific implementation of the scenario 1 includes the following steps.

S1601: An ouc apk downloads the rollback package, where the rollback package includes the version number of the version R. For details, refer to the description in S1002.

S1602: The ouc apk sends the rollback package to an update engine.

S1603: The update engine performs a data writing operation on the static partition (B) based on the rollback package, to update the static partition (B). For details, refer to the description in S1003.

S1604: The update engine writes the system data of the dynamic partition (Super) into the user data partition (Userdata) based on the rollback package. For details, refer to the description in S1004.

S1605: The update engine changes the boot sequence from booting from the static partition (A) to booting from the static partition (B). For details, refer to the description in S1005.

S1606: The update engine compares the version number of the version R with the version number of the currently running version S, and determines that the currently obtained package is a rollback package. For details, refer to the description in S1301 and context thereof.

S1607: The update engine writes the preset identifier used to indicate that the current scenario is a rollback scenario into the sub-partition A.

For example, the update engine writes the preset identifier into the Misc sub-partition in the basic partition (Common), that is, the sub-partition A is the Misc sub-partition in the basic partition (Common). For details, refer to the description in S1302 and context thereof.

S1608: The update engine triggers the electronic device to reboot and enter the recovery mode. For details, refer to the description in S1006.

That is, only when it is determined that the currently obtained package is a rollback package, the electronic device reboots and enters the recovery mode.

S1609: A recovery process reads the preset identifier from the sub-partition A.

If the preset identifier is read from the sub-partition A, it indicates that the current scenario is a rollback scenario. For details, refer to the description in S1302 and context thereof.

S1610: The recovery process triggers start of a merge (merge) service.

S1611: The merge service merges the data in the virtual dynamic partition into the dynamic partition (Super).

That is, the merge service completes the merging processing. For details, refer to the description in S1007.

S1612: The recovery process synchronizes the data in the static partition (B) to the static partition (A). For details, refer to the description in S1008.

S1613: The recovery process formats the user data partition (Userdata). For details, refer to the description in S1009.

S1614: The recovery process triggers reboot. For details, refer to the description in S1010.

Scenario 2: There is an upgrade from an operating system of a version R to an operating system of a version S, and the version R is lower than the version S. That is, a scenario of an upgrade from an operating system of a lower version to an operating system of a higher version may also be referred to as an upgrade scenario. For ease of description, in the scenario 2, the version R may be referred to as a third version, and the version S may be referred to as a first version. It should be understood that the version R in the scenario 2 may be the same as or different from the version R in the scenario 1. This is not specifically limited in this embodiment of this application.

In the scenario 2, an electronic device may write system data of the operating system of the version S in a standby state. In addition, because there is an upgrade from the operating system of the lower version to the operating system of the higher version, encrypted data in a user data partition (Userdata) may be decrypted by using a key of the operating system of the higher version. Therefore, after the system data of the operating system of the version S is written, the electronic device may directly reboot to run in the operating system of the version S, and there is no need to complete merging processing and format the user data partition (Userdata) in a recovery mode, and then boot the electronic device to run in the operating system of the version S.

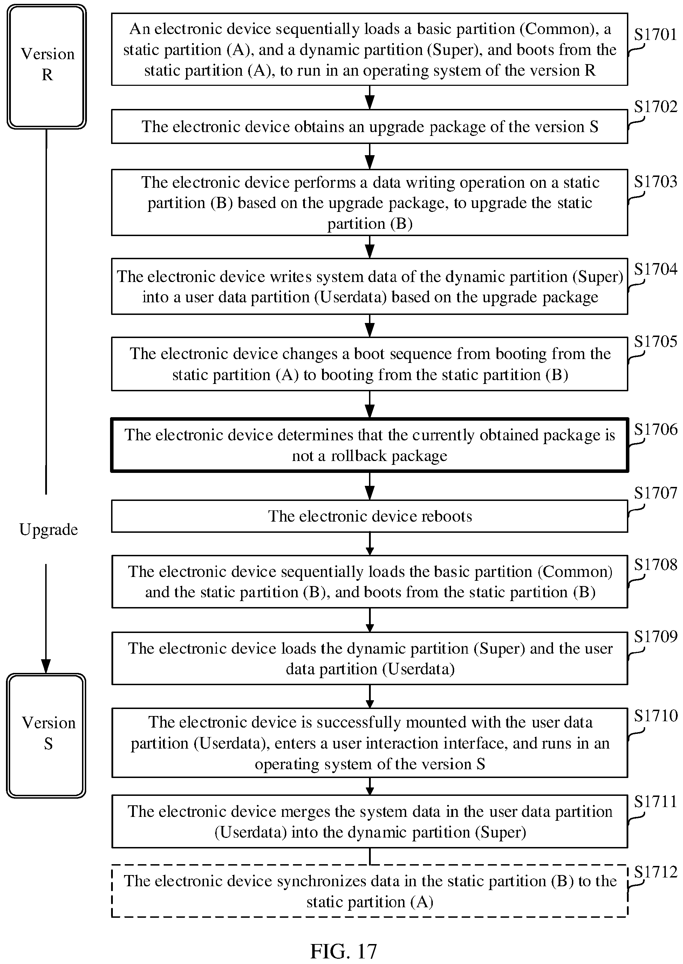

Referring to FIG. 17, an example in which the electronic device currently boots from a static partition (A) is used. In the scenario 2, a process of the upgrade from the operating system of the version R to the operating system of the version S includes the following steps.

S1701: The electronic device sequentially loads a basic partition (Common), the static partition (A), and a dynamic partition (Super), and boots from the static partition (A), to run in the operating system of the version R.

For ease of description, in the scenario 2, the static partition (A) may be referred to as a second static partition, and a static partition (B) may be referred to as a first static partition.

S1702: The electronic device obtains an upgrade package of the version S.

The upgrade package of the version S may also be referred to as a second installation package. Similar to the rollback package, the upgrade package also includes system data (which may also be referred to as third system data) that needs to be stored in a static partition and system data (which may also be referred to as fourth system data) that needs to be stored in the dynamic partition (Super).

For example, the electronic device may periodically initiate a package search request to a server. The package search request includes a version number of an operating system currently running in the electronic device, for example, a version number V1.0. The server retrieves, based on the version number in the package search request, whether there is currently an installation package of a newer operating system (for example, an installation package of an operating system of a version 2.0, which may also be referred to as an upgrade package). When there is an upgrade package, the server feeds back a download address of the upgrade package to the electronic device. The electronic device downloads the installation package based on the download address.

S1703: The electronic device performs a data writing operation on the static partition (B) based on the upgrade package, to upgrade the static partition (B).

For example, the third system data is written into the static partition (B).

S1704: The electronic device writes system data of the dynamic partition (Super) into the user data partition (Userdata) based on the upgrade package.

For example, the fourth system data is written into the user data partition (Userdata).

For a specific implementation of S1703-S1704, refer to the description in S1003-S1004. Details are not described herein again. A main difference lies in that data in the rollback package and data in the upgrade package are different.

S1705: The electronic device changes a boot sequence from booting from the static partition (B) to booting from the static partition (B). For details, refer to the description in S1005.

S1706: The electronic device determines that the currently obtained package is not a rollback package. For details, refer to the description in S1301 and context thereof.

For example, the installation package carries a version number of the version S, the version number of the operating system currently running in the electronic device is a version number (which may also be referred to as a third version number) of the version R, and the version number of the version S is higher than the version number of the version R. That is, the version number carried in the installation package is higher than the version number of the operating system currently running in the electronic device. In this case, the electronic device may determine that the currently obtained package is not a rollback package, that is, the installation package is not used to install an operating system of a version lower than the version R.

S 1707: The electronic device reboots.

In the scenario 2, it is determined that the obtained package is not a rollback package. Therefore, the electronic device does not need to reboot or enter the recovery mode, but only normally reboots.

In addition, different from S1006, the reboot in S1707 is usually reboot implemented through hardware. For example, a user touches and holds a power key to trigger reboot. In this way, when the user does not need to use the electronic device, the electronic device may be triggered to reboot.

S1708: The electronic device sequentially loads the basic partition (Common) and the static partition (B), and boots from the static partition (B).

S1709: The electronic device loads the dynamic partition (Super) and the user data partition (Userdata).

For example, the electronic device loads, through combination by using a snapshot, the dynamic partition (Super) and a cow file (that is, the fourth system data) retrieved from the user data partition (Userdata).

S1710: The electronic device is successfully mounted with the user data partition (Userdata), enters a user interaction interface, and runs in the operating system of the version R.

Because there is an upgrade from the version R to the version S, a key is compatible. Therefore, the user data partition can be successfully mounted.

S1711: The electronic device merges the system data in the user data partition (Userdata) into the dynamic partition (Super).

For example, the fourth system data in the user data partition is written into the dynamic partition (Super).

For a specific implementation of S1708-S1711, refer to descriptions of a related conventional technology of virtual A/B upgrade. Details are not described herein again.

S1712: The electronic device synchronizes data in the static partition (B) to the static partition (A). For details, refer to the description in S1008.

Scenario 3: An electronic device currently runs in an operating system of a version R, and enters a recovery mode in a case other than the scenario 1.

For ease of description, the version R in the scenario 3 may be referred to as a second version.

The case (which may also be referred to as a preset event) other than the scenario 1 is a case, other than the scenario 1, in which corresponding processing needs to be completed in the recovery mode. The case includes but is not limited to any one of the following cases: a case in which a user manually operates to enter the recovery mode to perform processing such as flashing or restoration of factory settings; a case in which the recovery mode is entered when there is a standard modification requirement, to implement standard modification; and a case in which the recovery mode is entered when a data storage structure needs to be modified, to modify the data storage structure.

In the scenario 3, after rebooting and entering the recovery mode, the electronic device determines that a current scenario is not a rollback scenario, that is, determines that entering a repair mode this time is not to install an operating system of a version lower than the first version. For example, because it is not a case in which the recovery mode is entered after a rollback package is obtained, no preset identifier is recorded in a sub-partition A. Correspondingly, in the recovery mode, the electronic device reads no preset identifier from the sub-partition A, and then determines that the current scenario is not a rollback scenario. In this case, after the recovery mode is entered, processing such as merging into a dynamic partition (Super) and formatting of a user data partition (Userdata) is not performed. Instead, corresponding processing is completed based on another identified objective. For example, if a scenario of modifying a data storage structure is identified, in the recovery mode, the electronic device may perform an operation of modifying the data storage structure. For another example, if a standard modification scenario is identified, in the recovery mode, the electronic device may perform an operation of modifying a demo standard to a commercial standard.

An embodiment of this application further provides an electronic device. The electronic device may include a memory and one or more processors. The memory is coupled to the processor. The memory is configured to store computer program code, and the computer program code includes computer instructions. When the processor executes the computer instructions, the electronic device may be enabled to perform the steps in the foregoing embodiments. Certainly, the electronic device includes but is not limited to the memory and the one or more processors.

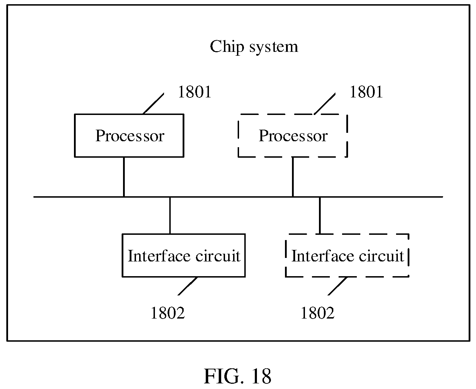

An embodiment of this application further provides a chip system. The chip system may be applied to the electronic device in the foregoing embodiments. As shown in FIG. 18, the chip system includes at least one processor 1801 and at least one interface circuit 1802. The processor 1801 may be the processor in the foregoing electronic device. The processor 1801 and the interface circuit 1802 may be connected to each other through a line. The processor 1801 may receive computer instructions from the memory of the foregoing electronic device through the interface circuit 1802, and execute the computer instructions. When the computer instructions are executed by the processor 1801, the electronic device may be enabled to perform the steps in the foregoing embodiments. Certainly, the chip system may further include another discrete device. This is not specifically limited in this embodiment of this application.

In some embodiments, it may be clearly understood by a person skilled in the art through descriptions of the foregoing implementations that for ease and brevity of description, division of the foregoing functional modules is merely used as an example for description. In actual applications, the foregoing functions may be allocated to different functional modules for completion based on a requirement, that is, an internal structure of the apparatus is divided into different functional modules to complete all or some of the functions described above. For specific working processes of the system, apparatus, and unit described above, refer to corresponding processes in the method embodiments. Details are not described herein again.

In the embodiments of this application, functional units in the embodiments may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The storage medium includes any medium that can store program code, for example, a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. An operating system upgrade method, applied to an electronic device, wherein the electronic device comprises a memory (321), the memory (321) comprises a basic partition, a first static partition, a second static partition, a dynamic partition, and a user data partition, and the method comprises:
loading (S1001) the basic partition, the first static partition, and the dynamic partition to run an operating system of a first version;
obtaining (S1002) a first installation package, wherein the first installation package is an installation package of an operating system of a second version, the second version is lower than the first version, and the first installation package comprises first system data and second system data of the operating system of the second version;
writing (S1003) the first system data into the second static partition, and writing (S1004) the second system data into the user data partition;
rebooting (S1006) and entering a repair mode;
writing (S1007) the second system data in the user data partition into the dynamic partition in the repair mode, and formatting (S1009) the user data partition; and
rebooting (S1010) and loading (S1011) the basic partition, the second static partition, and the dynamic partition to run the operating system of the second version.

2. The method according to claim 1, wherein before the rebooting and entering a repair mode, the method further comprises:
determining that the first installation package is used to install an operating system of a version lower than the first version.

3. The method according to claim 2, wherein the first installation package comprises a first version number, the first version number is a version number of the second version, and the determining that the first installation package is used to install an operating system of a version lower than the first version comprises:
determining that the first version number is lower than a second version number, wherein the second version number is a version number of the first version.

4. The method according to claim 2 or 3, wherein after the determining that the first installation package is used to install an operating system of a version lower than the first version, the method further comprises:
recording a preset identifier in a preset sub-partition, wherein the preset sub-partition is a sub-partition accessible in the repair mode; and
the writing the second system data in the user data partition into the dynamic partition in the repair mode, and formatting the user data partition comprises:
if the preset identifier is read from the preset sub-partition in the repair mode, writing the second system data in the user data partition into the dynamic partition, and formatting the user data partition.

5. The method according to any one of claims 1-4, wherein before the obtaining a first installation package, the method further comprises:
displaying a first interface, wherein the first interface comprises a first control;
sending a package search request to a server in response to a first operation performed by a user on the first control; and
receiving a download address fed back by the server based on the package search request; and
the obtaining a first installation package comprises:
downloading the first installation package based on the download address.

6. The method according to any one of claims 1-5, wherein after the obtaining a first installation package, the method further comprises:
displaying a second interface, wherein the second interface comprises version information of the operating system of the second version and a second control, and the second control is used to trigger installation of the operating system of the second version; and
the writing the first system data into the second static partition, and writing the second system data into the user data partition comprises:
in response to a second operation performed by the user on the second control, writing the first system data into the second static partition, and writing the second system data into the user data partition.

7. The method according to any one of claims 1-6, wherein after the writing the second system data in the user data partition into the dynamic partition, the method further comprises:
synchronizing (S1008) the first system data in the second static partition to the first static partition.

8. The method according to any one of claims 1-7, wherein in a process of writing the first system data into the second static partition, and writing the second system data into the user data partition, the method further comprises:
displaying a third interface (1201), wherein the third interface (1201) is an interface in a standby state of the electronic device.

9. The method according to any one of claims 1-8, wherein in a process of writing the second system data in the user data partition into the dynamic partition in the repair mode, and formatting the user data partition, the method further comprises:
displaying a fourth interface (1501), wherein the fourth interface (1501) comprises progress prompt information, and the progress prompt information is used to notify merging and formatting progress; and the electronic device does not respond to an operation performed by the user on the fourth interface.

10. The method according to any one of claims 1-9, wherein the rebooting and entering a repair mode comprises:
rebooting and starting a repair process; and
the writing the second system data in the user data partition into the dynamic partition in the repair mode comprises:
triggering, by the repair process, start of a merge service, and writing, by the merge service, the second system data in the user data partition into the dynamic partition; and
formatting, by the repair process, the user data partition.

11. The method according to any one of claims 1-10, wherein the second version meets at least one of the following conditions:
the second version is a preset version;
the second version is higher than a version of an operating system installed when the electronic device is delivered from a factory; and
the second version is a version that is allowed to be installed in an area in which the electronic device is used.

12. The method according to any one of claims 1-11, wherein before the loading the basic partition, the first static partition, and the dynamic partition to run an operating system of a first version, the method further comprises:
loading (S1701) the basic partition, the second static partition, and the dynamic partition to run an operating system of a third version, wherein the third version is lower than the first version;
obtaining (S1702) a second installation package, wherein the second installation package is used for an upgrade to the operating system of the first version, and the second installation package comprises third system data and fourth system data of the operating system of the first version;
writing (S1703) the third system data into the first static partition, and writing (S1704) the fourth system data into the user data partition; and
rebooting (S1707); and
the loading the basic partition, the first static partition, and the dynamic partition to run an operating system of a first version comprises:
loading (S1708, S1709) the basic partition, the first static partition, the dynamic partition, and the fourth system data in the user data partition to run the operating system of the first version; and
writing (S1711) the fourth system data in the user data partition into the dynamic partition.

13. The method according to claim 12, wherein the second installation package comprises the second version number, the second version number is the version number of the first version, and before the rebooting, and loading the basic partition, the first static partition, the dynamic partition, and the user data partition, the method further comprises:
determining that a third version number is lower than the second version number, wherein the third version number is a version number of the third version.

14. An electronic device, wherein the electronic device comprises a processor (310) and a memory (321), the memory (321) comprises a basic partition, a first static partition, a second static partition, a dynamic partition, and a user data partition, and the processor (310) is configured to execute software code stored in the memory (321), to enable the electronic device to perform the method according to any one of claims 1-13.

15. A computer-readable storage medium, wherein the computer-readable storage medium stores a computer program, and when the computer program is run on an electronic device, the electronic device is enabled to perform the method according to any one of claims 1-13.

## Patentansprüche

1. Verfahren zum Aktualisieren eines Betriebssystems, angewendet auf eine elektronische Vorrichtung, wobei die elektronische Vorrichtung einen Speicher (321) umfasst, wobei der Speicher (321) eine Basispartition, eine erste statische Partition, eine zweite statische Partition, eine dynamische Partition und eine Benutzerdatenpartition umfasst, und das Verfahren umfasst:
Laden (S1001) der Basispartition, der ersten statischen Partition und der dynamischen Partition, um ein Betriebssystem einer ersten Version auszuführen;
Erhalten (S1002) eines ersten Installationspakets, wobei das erste Installationspaket ein Installationspaket eines Betriebssystems einer zweiten Version ist, die zweite Version niedriger als die erste Version ist und das erste Installationspaket erste Systemdaten und zweite Systemdaten des Betriebssystems der zweiten Version umfasst;
Schreiben (S1003) der ersten Systemdaten in die zweite statische Partition und Schreiben (S1004) der zweiten Systemdaten in die Benutzerdatenpartition;
Neustarten (S1006) und Aufrufen eines Reparaturmodus;
Schreiben (S1007) der zweiten Systemdaten in der Benutzerdatenpartition in die dynamische Partition im Reparaturmodus und Formatieren (S1009) der Benutzerdatenpartition; und
Neustarten (S1010) und Laden (S1011) der Basispartition, der zweiten statischen Partition und der dynamischen Partition, um das Betriebssystem der zweiten Version auszuführen.

2. Verfahren nach Anspruch 1, wobei das Verfahren vor dem Neustarten und Aufrufen eines Reparaturmodus ferner umfasst:
Bestimmen, dass das erste Installationspaket verwendet wird, um ein Betriebssystem einer Version zu installieren, die niedriger als die erste Version ist.

3. Verfahren nach Anspruch 2, wobei das erste Installationspaket eine erste Versionsnummer umfasst, die erste Versionsnummer eine Versionsnummer der zweiten Version ist, und das Bestimmen, dass das erste Installationspaket verwendet wird, um ein Betriebssystem einer Version zu installieren, die niedriger als die erste Version ist, umfasst:
Bestimmen, dass die erste Versionsnummer niedriger als eine zweite Versionsnummer ist, wobei die zweite Versionsnummer eine Versionsnummer der ersten Version ist.

4. Verfahren nach Anspruch 2 oder 3, wobei das Verfahren nach dem Bestimmen, dass das erste Installationspaket verwendet wird, um ein Betriebssystem einer Version zu installieren, die niedriger als die erste Version ist, ferner umfasst:
Aufzeichnen einer voreingestellten Kennung in einer voreingestellten Unterpartition, wobei die voreingestellte Unterpartition eine im Reparaturmodus zugängliche Unterpartition ist; und
das Schreiben der zweiten Systemdaten in der Benutzerdatenpartition in die dynamische Partition im Reparaturmodus und das Formatieren der Benutzerdatenpartition umfasst:
Falls die voreingestellte Kennung im Reparaturmodus aus der voreingestellten Unterpartition gelesen wird, Schreiben der zweiten Systemdaten in der Benutzerdatenpartition in die dynamische Partition und Formatieren der Benutzerdatenpartition.

5. Verfahren nach einem der Ansprüche 1-4, wobei das Verfahren vor dem Erhalten eines ersten Installationspakets ferner umfasst:
Anzeigen einer ersten Schnittstelle, wobei die erste Schnittstelle ein erstes Steuerelement umfasst;
Senden einer Paketsuchanfrage an einen Server als Reaktion auf eine erste durch einen Benutzer auf dem ersten Steuerelement durchgeführte Operation; und
Empfangen einer vom Server basierend auf der Paketsuchanfrage zurückgemeldeten Download-Adresse; und
das Erhalten eines ersten Installationspakets umfasst:
Herunterladen des ersten Installationspakets basierend auf der Download-Adresse.

6. Verfahren nach einem der Ansprüche 1-5, wobei das Verfahren nach dem Erhalten eines ersten Installationspakets ferner umfasst:
Anzeigen einer zweiten Schnittstelle, wobei die zweite Schnittstelle Versionsinformationen des Betriebssystems der zweiten Version und ein zweites Steuerelement umfasst, und das zweite Steuerelement dazu dient, die Installation des Betriebssystems der zweiten Version auszulösen; und
das Schreiben der ersten Systemdaten in die zweite statische Partition und das Schreiben der zweiten Systemdaten in die Benutzerdatenpartition umfasst:
als Reaktion auf eine zweite durch den Benutzer auf dem zweiten Steuerelement durchgeführte Operation, Schreiben der ersten Systemdaten in die zweite statische Partition und Schreiben der zweiten Systemdaten in die Benutzerdatenpartition.

7. Verfahren nach einem der Ansprüche 1-6, wobei das Verfahren nach dem Schreiben der zweiten Systemdaten in der Benutzerdatenpartition in die dynamische Partition ferner umfasst:
Synchronisieren (S1008) der ersten Systemdaten in der zweiten statischen Partition mit der ersten statischen Partition.

8. Verfahren nach einem der Ansprüche 1-7, wobei das Verfahren in einem Prozess des Schreibens der ersten Systemdaten in die zweite statische Partition und des Schreibens der zweiten Systemdaten in die Benutzerdatenpartition ferner umfasst:
Anzeigen einer dritten Schnittstelle (1201), wobei die dritte Schnittstelle (1201) eine Schnittstelle in einem Standby-Zustand der elektronischen Vorrichtung ist.

9. Verfahren nach einem der Ansprüche 1-8, wobei das Verfahren in einem Prozess des Schreibens der zweiten Systemdaten in der Benutzerdatenpartition in die dynamische Partition im Reparaturmodus und des Formatierens der Benutzerdatenpartition ferner umfasst:
Anzeigen einer vierten Schnittstelle (1501), wobei die vierte Schnittstelle (1501) Fortschritts-Hinweisinformationen umfasst, und die Fortschritts-Hinweisinformationen dazu dienen, den Zusammenführungs- und Formatierungsfortschritt zu benachrichtigen; und die elektronische Vorrichtung reagiert nicht auf eine vom Benutzer auf der vierten Schnittstelle durchgeführte Operation.

10. Verfahren nach einem der Ansprüche 1-9, wobei das Neustarten und Aufrufen eines Reparaturmodus umfasst:
Neustarten und Starten eines Reparaturprozesses; und
wobei das Schreiben der zweiten Systemdaten in der Benutzerdatenpartition in die dynamische Partition im Reparaturmodus umfasst:
Auslösen des Starts eines Zusammenführungsdienstes durch den Reparaturprozess und Schreiben der zweiten Systemdaten in der Benutzerdatenpartition in die dynamische Partition durch den Zusammenführungsdienst; und
Formatieren der Benutzerdatenpartition durch den Reparaturprozess.

11. Verfahren nach einem der Ansprüche 1-10, wobei die zweite Version mindestens eine der folgenden Bedingungen erfüllt:
die zweite Version ist eine voreingestellte Version;
die zweite Version ist höher als eine Version eines Betriebssystems, das bei der Auslieferung der elektronischen Vorrichtung ab Werk installiert ist; und
die zweite Version ist eine Version, deren Installation in einem Gebiet, in dem die elektronische Vorrichtung verwendet wird, zulässig ist.

12. Verfahren nach einem der Ansprüche 1-11, wobei vor dem Laden der Basispartition, der ersten statischen Partition und der dynamischen Partition zum Ausführen eines Betriebssystems einer ersten Version, das Verfahren ferner umfasst:
Laden (S1701) der Basispartition, der zweiten statischen Partition und der dynamischen Partition zum Ausführen eines Betriebssystems einer dritten Version, wobei die dritte Version niedriger als die erste Version ist;
Erhalten (S1702) eines zweiten Installationspakets, wobei das zweite Installationspaket für ein Upgrade auf das Betriebssystem der ersten Version verwendet wird und das zweite Installationspaket dritte Systemdaten und vierte Systemdaten des Betriebssystems der ersten Version umfasst;
Schreiben (S1703) der dritten Systemdaten in die erste statische Partition und Schreiben (S1704) der vierten Systemdaten in die Benutzerdatenpartition; und
Neustarten (S1707); und
wobei das Laden der Basispartition, der ersten statischen Partition und der dynamischen Partition zum Ausführen eines Betriebssystems einer ersten Version umfasst:
Laden (S1708, S1709) der Basispartition, der ersten statischen Partition, der dynamischen Partition und der vierten Systemdaten in der Benutzerdatenpartition zum Ausführen des Betriebssystems der ersten Version; und
Schreiben (S1711) der vierten Systemdaten in der Benutzerdatenpartition in die dynamische Partition.

13. Verfahren nach Anspruch 12, wobei das zweite Installationspaket die zweite Versionsnummer umfasst, die zweite Versionsnummer die Versionsnummer der ersten Version ist, und das Verfahren vor dem Neustart sowie dem Laden der Basispartition, der ersten statischen Partition, der dynamischen Partition und der Benutzerdatenpartition ferner umfasst:
Bestimmen, dass eine dritte Versionsnummer niedriger als die zweite Versionsnummer ist, wobei die dritte Versionsnummer eine Versionsnummer der dritten Version ist.

14. Elektronische Vorrichtung, wobei die elektronische Vorrichtung einen Prozessor (310) und einen Speicher (321) umfasst, wobei der Speicher (321) eine Basispartition, eine erste statische Partition, eine zweite statische Partition, eine dynamische Partition und eine Benutzerdatenpartition umfasst, und der Prozessor (310) dazu konfiguriert ist, im Speicher (321) gespeicherten Softwarecode auszuführen, um die elektronische Vorrichtung zu veranlassen, das Verfahren nach einem der Ansprüche 1-13 auszuführen.

15. Computerlesbares Speichermedium, wobei das computerlesbare Speichermedium ein Computerprogramm speichert, und wobei, wenn das Computerprogramm auf einer elektronischen Vorrichtung ausgeführt wird, die elektronische Vorrichtung veranlasst wird, das Verfahren nach einem der Ansprüche 1-13 auszuführen.

## Revendications

1. Procédé de mise à niveau de système d'exploitation, appliqué à un dispositif électronique, dans lequel le dispositif électronique comprend une mémoire (321), la mémoire (321) comprend une partition de base, une première partition statique, une seconde partition statique, une partition dynamique et une partition de données utilisateur, et le procédé comprend :
le chargement (S1001) de la partition de base, de la première partition statique et de la partition dynamique pour exécuter un système d'exploitation d'une première version ;
l'obtention (S1002) d'un premier paquet d'installation, dans lequel le premier paquet d'installation est un paquet d'installation d'un système d'exploitation d'une seconde version, la seconde version est inférieure à la première version, et le premier paquet d'installation comprend des premières données système et des secondes données système du système d'exploitation de la seconde version ;
l'écriture (S1003) des premières données système dans la seconde partition statique, et l'écriture (S1004) des secondes données système dans la partition de données utilisateur ;
le redémarrage (S1006) et l'entrée dans un mode de réparation ;
l'écriture (S1007) des secondes données système situées dans la partition de données utilisateur dans la partition dynamique en mode de réparation, et le formatage (S1009) de la partition de données utilisateur ; et
le redémarrage (S1010) et le chargement (S1011) de la partition de base, de la seconde partition statique et de la partition dynamique pour exécuter le système d'exploitation de la seconde version.

2. Procédé selon la revendication 1, dans lequel avant le redémarrage et l'entrée dans un mode de réparation, le procédé comprend en outre :
la détermination que le premier paquet d'installation est utilisé pour installer un système d'exploitation d'une version inférieure à la première version.

3. Procédé selon la revendication 2, dans lequel le premier paquet d'installation comprend un premier numéro de version, le premier numéro de version est un numéro de version de la seconde version, et la détermination que le premier paquet d'installation est utilisé pour installer un système d'exploitation d'une version inférieure à la première version comprend :
la détermination que le premier numéro de version est inférieur à un second numéro de version, dans lequel le second numéro de version est un numéro de version de la première version.

4. Procédé selon la revendication 2 ou 3, dans lequel après la détermination que le premier paquet d'installation est utilisé pour installer un système d'exploitation d'une version inférieure à la première version, le procédé comprend en outre :
l'enregistrement d'un identifiant prédéfini dans une sous-partition prédéfinie, dans lequel la sous-partition prédéfinie est une sous-partition accessible en mode de réparation ; et
l'écriture des secondes données système situées dans la partition de données utilisateur dans la partition dynamique en mode de réparation, et le formatage de la partition de données utilisateur comprend :
si l'identifiant prédéfini est lu à partir de la sous-partition prédéfinie dans le mode réparation, écrire les secondes données système dans la partition de données utilisateur vers la partition dynamique, et formater la partition de données utilisateur.

5. Procédé selon l'une quelconque des revendications 1 à 4, dans lequel avant l'obtention d'un premier paquet d'installation, le procédé comprend en outre :
l'affichage d'une première interface, dans laquelle la première interface comprend une première commande ;
l'envoi d'une requête de recherche de paquet à un serveur en réponse à une première opération effectuée par un utilisateur sur la première commande ; et
la réception d'une adresse de téléchargement renvoyée par le serveur sur la base de la requête de recherche de paquet ; et
l'obtention d'un premier paquet d'installation comprend :
le téléchargement du premier paquet d'installation sur la base de l'adresse de téléchargement.

6. Procédé selon l'une quelconque des revendications 1 à 5, dans lequel après l'obtention d'un premier paquet d'installation, le procédé comprend en outre :
l'affichage d'une seconde interface, dans laquelle la seconde interface comprend des informations de version du système d'exploitation de la seconde version et une seconde commande, et la seconde commande est utilisée pour déclencher l'installation du système d'exploitation de la seconde version ; et
l'écriture des premières données système dans la seconde partition statique, et l'écriture des secondes données système dans la partition de données utilisateur comprend :
en réponse à une seconde opération effectuée par l'utilisateur sur la seconde commande, l'écriture des premières données système dans la seconde partition statique, et l'écriture des secondes données système dans la partition de données utilisateur.

7. Procédé selon l'une quelconque des revendications 1 à 6, dans lequel après l'écriture des secondes données système dans la partition de données utilisateur vers la partition dynamique, le procédé comprend en outre :
la synchronisation (S1008) des premières données système dans la seconde partition statique vers la première partition statique.

8. Procédé selon l'une quelconque des revendications 1 à 7, dans lequel, au cours d'un processus d'écriture des premières données système dans la seconde partition statique, et d'écriture des secondes données système dans la partition de données utilisateur, le procédé comprend en outre :
l'affichage d'une troisième interface (1201), dans laquelle la troisième interface (1201) est une interface dans un état de veille du dispositif électronique.

9. Procédé selon l'une quelconque des revendications 1 à 8, dans lequel, au cours d'un processus d'écriture des secondes données système dans la partition de données utilisateur vers la partition dynamique dans le mode réparation, et de formatage de la partition de données utilisateur, le procédé comprend en outre :
afficher une quatrième interface (1501), dans laquelle la quatrième interface (1501) comprend des informations d'invite de progression, et les informations d'invite de progression sont utilisées pour notifier la progression de la fusion et du formatage ; et le dispositif électronique ne répond pas à une opération effectuée par l'utilisateur sur la quatrième interface.

10. Procédé selon l'une quelconque des revendications 1 à 9, dans lequel le redémarrage et l'entrée dans un mode de réparation comprennent :
le redémarrage et le lancement d'un processus de réparation ; et
l'écriture des secondes données système dans la partition de données utilisateur vers la partition dynamique en mode de réparation comprend :
le déclenchement, par le processus de réparation, du démarrage d'un service de fusion, et l'écriture, par le service de fusion, des secondes données système dans la partition de données utilisateur vers la partition dynamique ; et
le formatage, par le processus de réparation, de la partition de données utilisateur.

11. Procédé selon l'une quelconque des revendications 1 à 10, dans lequel la seconde version remplit au moins l'une des conditions suivantes :
la seconde version est une version prédéfinie ;
la seconde version est supérieure à une version d'un système d'exploitation installé lorsque le dispositif électronique est livré depuis une usine ; et
la seconde version est une version autorisée à être installée dans une zone dans laquelle le dispositif électronique est utilisé.

12. Procédé selon l'une quelconque des revendications 1 à 11, dans lequel avant le chargement de la partition de base, de la première partition statique et de la partition dynamique pour exécuter un système d'exploitation d'une première version, le procédé comprend en outre :
le chargement (S1701) de la partition de base, de la seconde partition statique et de la partition dynamique pour exécuter un système d'exploitation d'une troisième version, dans lequel la troisième version est inférieure à la première version ;
l'obtention (S1702) d'un second paquet d'installation, dans lequel le second paquet d'installation est utilisé pour une mise à niveau vers le système d'exploitation de la première version, et le second paquet d'installation comprend des troisièmes données système et des quatrièmes données système du système d'exploitation de la première version ;
l'écriture (S1703) des troisièmes données système dans la première partition statique, et l'écriture (S1704) des quatrièmes données système dans la partition de données utilisateur ; et
le redémarrage (S1707) ; et
le chargement de la partition de base, de la première partition statique et de la partition dynamique pour exécuter un système d'exploitation d'une première version comprend :
le chargement (S1708, S1709) de la partition de base, de la première partition statique, de la partition dynamique et des quatrièmes données système dans la partition de données utilisateur pour exécuter le système d'exploitation de la première version ; et
écrire (S1711) les quatrièmes données système de la partition de données utilisateur dans la partition dynamique.

13. Procédé selon la revendication 12, dans lequel le second package d'installation comprend le second numéro de version, le second numéro de version est le numéro de version de la première version, et avant le redémarrage, et le chargement de la partition de base, la première partition statique, la partition dynamique et la partition de données utilisateur, le procédé comprend en outre :
la détermination qu'un troisième numéro de version est inférieur au second numéro de version, dans lequel le troisième numéro de version est un numéro de version de la troisième version.

14. Dispositif électronique, dans lequel le dispositif électronique comprend un processeur (310) et une mémoire (321), la mémoire (321) comprend une partition de base, une première partition statique, une seconde partition statique, une partition dynamique et une partition de données utilisateur, et le processeur (310) est configuré pour exécuter un code logiciel stocké dans la mémoire (321), pour amener le dispositif électronique à exécuter le procédé selon l'une quelconque des revendications 1 à 13.

15. Support de stockage lisible par ordinateur, dans lequel le support de stockage lisible par ordinateur stocke un programme informatique, et lorsque le programme informatique est exécuté sur un dispositif électronique, le dispositif électronique est amené à exécuter le procédé selon l'une quelconque des revendications 1 à 13.
